# EUROPEAN PATENT APPLICATION

(11) **EP 4 749 357 A1**
(43) Date of publication of application: **27.05.2026**
(21) Application number: 24854351.4
(22) Date of filing: 30.07.2024
(51) Int. Cl.: G02F 1/163, G09G 3/38, G02F 1/155, G02F 1/1523

(54) **DISPLAY DEVICE, DISPLAY DEVICE CONTROL METHOD AND DISPLAY DEVICE CONTROL PROGRAM**

(30) Priority: 17.08.2023 JP 2023132806
(71) Applicant: Samsung Electronics Co., Ltd., Suwon-si, Gyeonggi-do 16677 (KR)
(72) Inventor: MURAI, Atsuhito, Yokohama-shi, Kanagawa 230-0027 (JP); FUJIMORI, Takashige, Yokohama-shi, Kanagawa 230-0027 (JP); SUWA, Tatsuhiro, Yokohama-shi, Kanagawa 230-0027 (JP)
(74) Representative: Gulde & Partner
(86) International application number: PCT/KR2024/011121
(87) International publication number: WO 2025/037799

(57) **Abstract**

Provided is a display device capable of alleviating image quality degradation caused by instability in operation of an electrochromic element when a driving voltage is switched through the electrochromic element by means of a driving circuit. The display device according to one embodiment of the present document comprises: an image display device having a plurality of pixels; a dimming device which has a dimming image display unit having a plurality of dimming pixels, and which switches the transmittance of each dimming pixel; and a control unit for switching, to low transmittance, the transmittance of dimming pixels in a corresponding area of the dimming image display unit that corresponds to an object area in an image, wherein: the dimming pixel has an electrochromic element and a pixel circuit; the pixel circuit includes a driving circuit that is electrically connected to one electrode of the electrochromic element and that outputs a driving voltage to the electrode according to a signal voltage, a switching transistor for outputting the signal voltage to an input of the driving circuit according to an input scan signal, and a capacitive element connected to the input of the driving circuit so as to maintain the signal voltage output to the driving circuit; and the driving circuit can be a CMOS circuit using a transistor having enhanced characteristics.

## Description

### [Technical Field]

The disclosure relates to a display device, a control method for a display device, and a control program for a display device.

### [Background Art]

An electrochromic element is an element that switches between a light-shielding state that blocks light and a transparent state that transmits light by switching a driving voltage applied between electrodes.

A driving circuit using a complementary metal-oxide semiconductor (CMOS) circuit has been proposed as a driving circuit supplying a driving voltage to an electrochromic element. The driving circuit is installed for each dimming pixel including an electrochromic element.

For example, Japanese Patent Publication No. 2004-518159 discloses a CMOS circuit as a configuration of a driving circuit that transmits a voltage corresponding to a data voltage to an electrochromic light switching element. The CMOS circuit is composed of an n-type field effect transistor and a p-type field effect transistor. The two field effect transistors of the CMOS circuit are connected to a positive voltage line and a negative voltage line, respectively. The CMOS circuit outputs either the voltage of the positive voltage line or the voltage of the negative voltage line to the electrochromic light switching element according to the data voltage input to the CMOS circuit.

### [Detailed Description of the Invention]

### [Technical Problem]

However, a shoot-through current may flow in the CMOS circuit constituting the driving circuit that applies a driving voltage to an electrochromic element when switching the driving voltage. Such a shoot-through current may flow into the electrochromic element, causing the operation of the electrochromic element to become unstable. For example, when a signal (e.g., a signal for switching an electrochromic element from a transparent state to a light-shielding state, or vice versa) is input to a driving transistor configured to supply current to an electrochromic element, a voltage is applied to one electrode of the electrochromic element, temporarily causing an uncontrolled current to flow in, which may make the response of the electrochromic element unstable.

Various embodiments of the disclosure aim to provide a display device, a control method for a display device, and a control program for a display device that may enhance image quality deterioration caused by operational instability of an electrochromic element when a driving voltage to the electrochromic element by a driving circuit is switched (e.g., when a signal for switching the electrochromic element from a transparent state to a light-shielding state, or vice versa, is applied to a driving transistor).

### [Technical Solution]

A display device according to an embodiment of the disclosure includes an image display device including a plurality of pixels and configured to display an image, a dimming device including a dimming image display unit including a plurality of dimming pixels and configured to switch a transmittance of each dimming pixel of the dimming image display unit, and a control circuit configured to switch the transmittance of the dimming pixels in the corresponding region of the dimming image display unit corresponding to an object region in the image to low transmittance, wherein the dimming pixel includes an electrochromic element and a pixel circuit, the pixel circuit includes a driving circuit electrically connected to one electrode of the electrochromic element and applying a driving voltage to the electrode according to a voltage input to the pixel circuit, a switching transistor applying the voltage to the driving circuit according to a scanning signal input to the pixel circuit, and a capacitive element electrically connected to the input of the driving circuit and maintaining the voltage output to the driving circuit, and the driving circuit may include a CMOS circuit using a transistor having enhance characteristics (e.g., a circuit related to an enhancement-type MOSFET, a transistor having characteristics that turns OFF when the gate-source voltage (Vgs) is 0V and the drain current (Ids) does not flow).

### [Advantageous Effects]

According to various embodiments of the disclosure, based on including a driving circuit electrically connected to one electrode of an electrochromic element and outputting a driving voltage to the corresponding electrode of the electrochromic element according to a signal voltage input to the driving circuit, a display device may be provided that may enhance image quality deterioration caused by operational instability of the electrochromic element when the driving voltage to the electrochromic element by the driving circuit is switched.

### [Brief Description of Drawings]

FIG. 1A is an example view illustrating a configuration of an electrochromic element.
FIG. 1B is an example view illustrating a configuration of an electrochromic element.
FIG. 1C is an example view illustrating a configuration of an electrochromic element.
FIG. 2 is an example view illustrating a configuration of a dimming image display device (including a dimming image display unit).
FIG. 3 is an example view illustrating a configuration of a dimming image display device (including a dimming image display unit).
FIG. 4 is a block diagram illustrating the hardware component of a display device.
FIG. 5 is a perspective view illustrating a positional relationship between the dimming image display unit of the dimming image display device and the image display unit of the image display device.
FIG. 6 is a block diagram illustrating hardware components of the controller of the display device.
FIG. 7 is an explanatory diagram for describing an example of a circumstance in which the display device is used.
FIG. 8 is an explanatory diagram for describing another example of a circumstance in which the display device is used.
FIG. 9A is an explanatory diagram illustrating a comparative example for describing shoot-through current flowing in a CMOS circuit using TFTs having depression characteristics.
FIG. 9B is an explanatory diagram illustrating a comparative example for describing shoot-through current flowing in a CMOS circuit using TFTs having depression characteristics.
FIG. 9C is an explanatory diagram illustrating a comparative example for describing shoot-through current flowing in a CMOS circuit using TFTs having depression characteristics.
FIG. 10 is a view illustrating transfer characteristics of PMOS and NMOS of the CMOS circuit of the driving circuit.
FIG. 11 is a view illustrating shoot-through current generated when the signal voltage input to the driving circuit is switched.
FIG. 12A is a view illustrating a dimming pixel circuit.
FIG. 12B is a view illustrating a timing chart of an operation of writing a signal voltage to a dimming pixel.
FIG. 12C is a view illustrating the state of the electrochromic element of the dimming pixel to which the signal voltage is written in the timing chart of FIG. 12B.
FIG. 13 is a view illustrating a flowchart of the operation of the display device.
FIG. 14A is a view illustrating a dimming pixel circuit.
FIG. 14B is a view illustrating a timing chart of an operation of writing a signal voltage to a dimming pixel.
FIG. 14C is a view illustrating the state of the electrochromic element of the dimming pixel to which the signal voltage is written in the timing chart of FIG. 14B.
FIG. 15 is a view illustrating a flowchart of the operation of the dimming image display device.
FIG. 16A is a view illustrating a dimming pixel circuit.
FIG. 16B is a view illustrating a timing chart of an operation of writing a signal voltage to a dimming pixel.
FIG. 16C is an explanatory diagram describing the order of each row for writing a signal voltage and a reset voltage to a dimming pixel.
FIG. 17 is a view illustrating a flowchart of the operation of the dimming image display device.
FIG. 18A is a view illustrating a dimming pixel circuit.
FIG. 18B is a view illustrating a timing chart of an operation of writing a signal voltage to a dimming pixel.
FIG. 18C is a view illustrating the state of the electrochromic element of each dimming pixel before and after the signal voltage is written in the timing chart of FIG. 12A.
FIG. 19 is a view illustrating a flowchart of the operation of the dimming image display device.

### [Mode for Carrying out the Invention]

Hereinafter, a dimming pixel circuit driving an electrochromic element, a display device, a control method for a display device, and a control program for a display device are described in detail based on the drawings. The embodiments described are merely exemplary, and various modifications are possible from these embodiments. Hereinafter, the same reference numerals in the drawings refer to the same components, and the size of each component in the drawings is exaggerated for clarity and convenience of description.

Hereinafter, expressions described as "upper" or "above" include not only those directly above/below/left/right in contact but also those above/below/left/right without contact.

Terms such as first and second are used to describe various components but are used to distinguish one component from another component. These terms do not limit that the materials or structures of the components are different.

Singular expressions include plural expressions unless the context clearly indicates otherwise. Further, when a portion "includes" a component, this means that it may further include other components without excluding other components unless specifically stated otherwise.

Further, terms such as "unit" and "module" described in this specification mean a unit that processes one or more functions and operations, which may be implemented by hardware or software, or by a combination of hardware and software.

### (First Embodiment)

### <Electrochromic Element 110>

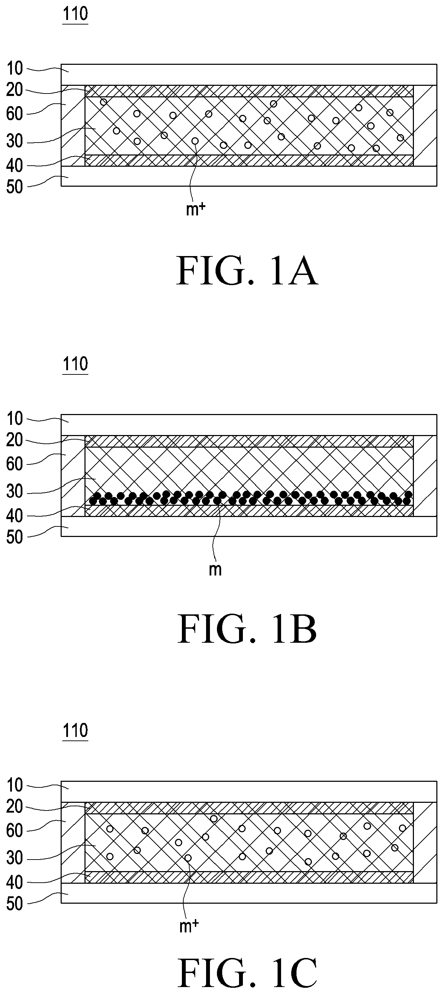

FIGS. 1A to 1C are views illustrating the configuration of an electrochromic element 110. FIG. 1A illustrates the state of the electrochromic element 110 when no voltage is applied. FIG. 1B illustrates the state of the electrochromic element 110 in a light-shielding state. FIG. 1C illustrates the state of the electrochromic element 110 in a transparent state (light transmission state).

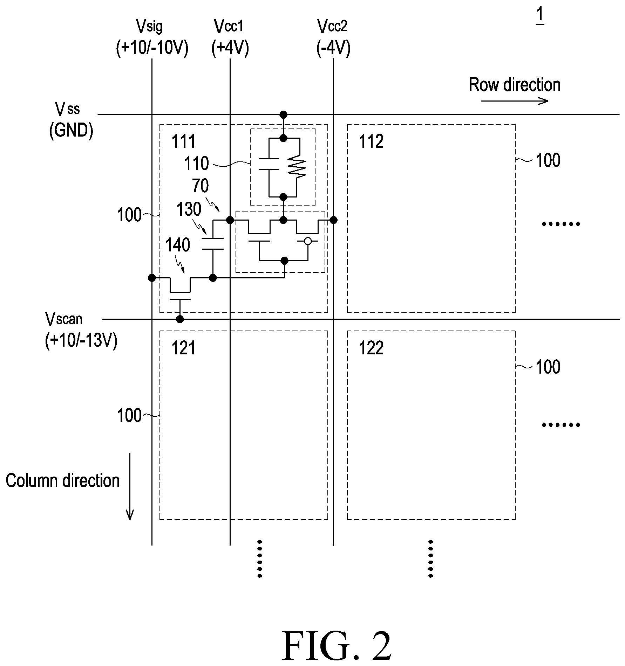

According to an embodiment of the disclosure, an electrochromic element 110 may include a first substrate 10, a first electrode 20 (e.g., anode) formed on the first substrate 10, a second substrate 50, and a second electrode 40 (e.g., cathode) formed on the second substrate 50. According to an embodiment of the disclosure, the electrochromic element 110 may include an electrolyte layer 30 sealed between the opposing first electrode 20 and second electrode 40. According to an embodiment of the disclosure, the electrolyte layer 30 may include an electrochromic material. According to an embodiment of the disclosure, the electrochromic element 110 may include a bank material 60 installed between the first substrate 10 and the second substrate 50 for sealing the electrolyte layer 30 for each dimming pixel 100 (see FIG. 2, etc.). However, according to an embodiment of the disclosure, the bank material 60 may not be provided.

According to an embodiment of the disclosure, the first substrate 10 and the second substrate 50 may include an insulating substrate having light transmittance. According to an embodiment of the disclosure, the first substrate 10 and the second substrate may be composed of, e.g., glass or resin.

According to an embodiment of the disclosure, the first electrode 20 and the second electrode 40 may include a transparent electrode film having light transmittance. According to an embodiment of the disclosure, the transparent electrode film may be configured to include at least one of, e.g., indium tin oxide (ITO), indium zinc oxide (IZO), SnO₂, and ZnO.

According to an embodiment of the disclosure, the electrolyte layer 30 may be configured to include an electrolyte, an electrochromic material, a mediator, and a solvent. According to an embodiment of the disclosure, the electrolyte included in the electrolyte layer 30 may have a function of promoting oxidation-reduction of the electrochromic material. According to an embodiment of the disclosure, the electrolyte may include a supporting electrolyte (e.g., an electrolyte that is not electrolyzed and is disposed in a solution to increase the electrical conductivity of the solution). According to an embodiment of the disclosure, the electrolyte may include, e.g., a lithium salt, a potassium salt, a sodium salt, etc. According to an embodiment of the disclosure, the lithium salt may include, e.g., lithium chloride (LiCl), lithium bromide (LiBr), lithium iodide (LiI), lithium tetrafluoroborate (LiBF₄), and lithium perchlorate (LiClO₄). According to an embodiment of the disclosure, the potassium salt may include potassium chloride (KCl), potassium bromide (KBr), and potassium iodide (KI). According to an embodiment of the disclosure, the sodium salt is sodium chloride (NaCl), sodium bromide (NaBr), and sodium iodide (NaI). The electrolyte may include bromine and may include, e.g., tetrabutylammonium bromide (TBABr).

According to an embodiment of the disclosure, the electrochromic material may include a material that causes an electrochemical oxidation-reduction reaction. According to an embodiment of the disclosure, in the electrochromic material, precipitation to the electrode surface and dissolution to the electrolyte layer 30 may occur by electrochemical oxidation and reduction reactions. According to an embodiment of the disclosure, the electrochromic material may include one or more metal elements selected from the group composed of silver (Ag), bismuth (Bi), chromium (Cr), iron (Fe), cadmium (Cd), cobalt (Co), nickel (Ni), tin (Sn), lead (Pb), and copper (Cu).

According to an embodiment of the disclosure, the mediator may include a material capable of performing oxidation-reduction at lower electrochemical energy than the electrochromic material. For example, the oxidant of the mediator may promote dissolution of the electrochromic material to the electrolyte layer 30 by exchanging electrons with the electrochromic material such as silver. For example, a salt of copper(II) ions may be used as the mediator, specifically copper chloride (CuCl₂), copper sulfate (CuSO₄), or copper bromide (CuBr₂) may be used.

According to an embodiment of the disclosure, the solvent may dissolve the electrolyte, the electrochromic material, and the mediator, and may maintain them stably. According to an embodiment of the disclosure, as the solvent, e.g., a polar solvent, an organic solvent, an ionic liquid, an ion-conducting polymer, a polymer electrolyte, etc. may be used. As the solvent, e.g., dimethyl sulfoxide (DMSO), propylene carbonate, N,N-dimethylformamide, tetrahydrofuran, acetonitrile, polyvinyl sulfuric acid, polystyrene sulfonic acid, or polyacrylic acid is used.

Further, a seal material (not illustrated) may be disposed in a frame shape along the periphery of the first substrate 10 and the second substrate 50. The electrolyte layer 30 may be filled in the space surrounded by the first substrate 10, the second substrate 50, and the seal material. The seal material may include, e.g., an ultraviolet curing resin or a thermosetting resin.

As illustrated in FIG. 1A, when no voltage is applied between the first electrode 20 and the second electrode 40, the electrochromic material including metal ions (m+) such as silver ions may be dissolved in the electrolyte layer 30.

As illustrated in FIG. 1B, when a voltage is applied between the first electrode 20 and the second electrode 40 so that the first electrode 20 becomes a positive electrode, the metal ions (m+) in the electrolyte layer 30 are decreased, and a metal (m) such as silver may be precipitated on the surface of the second electrode 40. In this case, the light transmittance of the electrochromic element 110 may decrease to about 1%. In other words, the electrochromic element 110 may be in a light-shielding state. In the light-shielding state, the precipitated metal (m) reflects visible light and may form a mirror surface on the surface of the second electrode 40.

As illustrated in FIG. 1C, when a voltage is applied between the first electrode 20 and the second electrode 40 so that the first electrode 20 becomes a negative electrode, the metal (m) precipitated on the surface of the second electrode 40 is oxidized and may become metal ions (m+). In this case, the light transmittance of the electrochromic element 110 may increase to about 75%. In other words, the electrochromic element 110 may be in a transparent state.

Hereinafter, the state of the electrochromic element 110 including the light-shielding state and the transparent state may also be simply referred to as "the state of the electrochromic element 110".

### <Dimming Image Display Device 1>

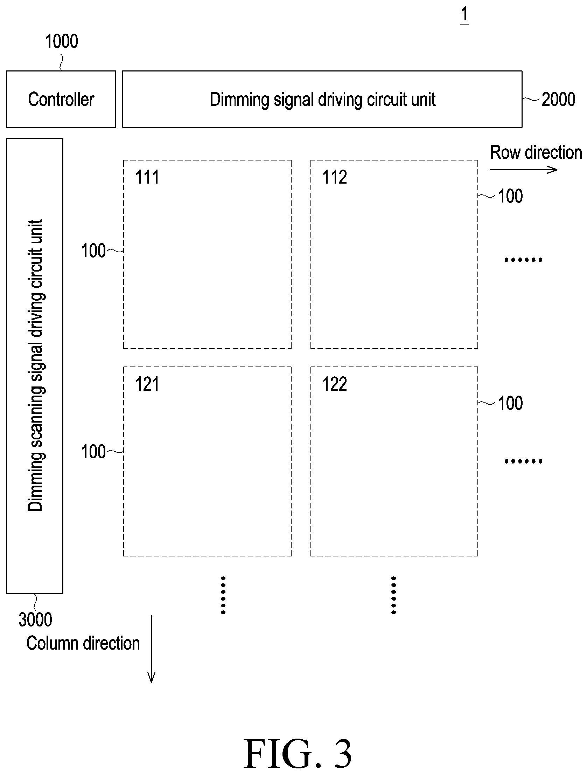

FIGS. 2 and 3 are views illustrating the configuration of the dimming image display device 1. The dimming image display device 1 may include a plurality of dimming pixels 100 disposed at substantially equal intervals in row and column directions. As illustrated in FIG. 2, the dimming pixel 100 may include an electrochromic element 110 and a dimming pixel circuit 70. According to an embodiment of the disclosure, the dimming pixel circuit 70 may include a driving circuit 120, a capacitive element 130, and a switching transistor 140. According to an embodiment of the disclosure, the driving circuit 120, the capacitive element 130, and the switching transistor 140 may be formed as a circuit pattern on a semiconductor substrate (not illustrated) using, e.g., a general semiconductor process. According to an embodiment of the disclosure, the semiconductor substrate may be mounted on a substrate (not illustrated) having light transmittance together with the electrochromic element 110.

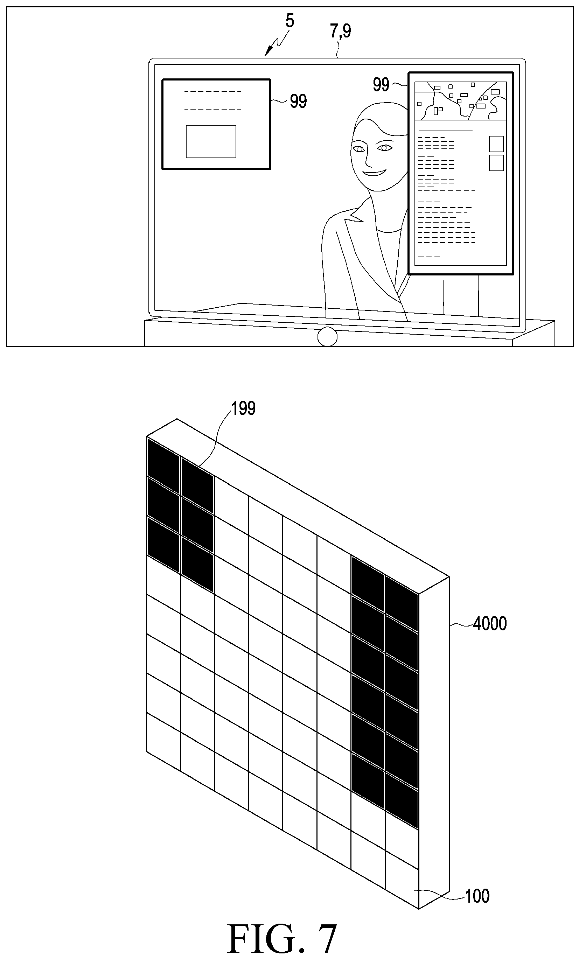

According to an embodiment of the disclosure, an image displayed by the plurality of dimming pixels 100 may be referred to as a dimming image 7 (see FIG. 7, etc.).

According to an embodiment of the disclosure, the electrochromic element 110 may also be represented by an equivalent circuit in which a capacitive element and a resistive element are connected in parallel.

According to an embodiment of the disclosure, the driving circuit 120 may include a CMOS circuit. According to an embodiment of the disclosure, the output terminal of the driving circuit 120 may be electrically connected to the first electrode 20, which is one electrode of the electrochromic element 110. According to an embodiment of the disclosure, the second electrode 40, which is the other electrode of the electrochromic element 110, is connected to a ground line (GND), and a ground potential (Vss) may be applied. According to an embodiment of the disclosure, the input terminal of the driving circuit 120 is electrically connected to the output terminal of the switching transistor 140 and may be connected to a signal line supplied with a dimming signal voltage (Vsig) through the switching transistor 140. According to an embodiment of the disclosure, the driving circuit 120 is connected to a first power supply line and a second power supply line, a first power supply voltage (Vcc1) may be supplied from the first power supply line, and a second power supply voltage (Vcc2) may be supplied from the second power supply line.

According to an embodiment of the disclosure, the switching transistor 140 includes at least one MOS (e.g., NMOS (n-channel MOS transistor)), the drain electrode may be connected to the signal line, the source electrode may be connected to the input terminal of the driving circuit 120, and the gate electrode may be connected to the scanning signal line. Further, according to an embodiment of the disclosure, a capacitive element 130 may be connected between the input terminal of the driving circuit 120 and the source electrode of the switching transistor 140. According to an embodiment of the disclosure, the switching transistor 140 may output the dimming signal voltage (Vsig) supplied from the signal line to the drain electrode toward the input terminal of the driving circuit 120 according to the scanning signal (Vscan) input to the gate electrode. In this case, the dimming signal voltage (Vsig) output to the input of the driving circuit 120 may be maintained by the capacitive element 130. According to an embodiment of the disclosure, when the dimming signal voltage (Vsig) is input to the driving circuit 120, it may output a driving voltage toward the first electrode 20 of the electrochromic element 110 according to the input dimming signal voltage (Vsig). For example, the driving circuit 120 may output the first power supply voltage (Vcc1) or the second power supply voltage (Vcc2) as the driving voltage toward the first electrode 20 of the electrochromic element 110 according to the dimming signal voltage (Vsig).

According to an embodiment of the disclosure, the first power supply voltage (Vcc1) may be, e.g., +4V. According to an embodiment of the disclosure, the second power supply voltage (Vcc2) may be, e.g., -4V. According to an embodiment of the disclosure, the scanning signal (Vscan) may include a pulse voltage with High at +10V and Low at -13V. According to an embodiment of the disclosure, the dimming signal voltage (Vsig) may include a pulse voltage with High at +10V and Low at -10V.

According to an embodiment of the disclosure, when the first power supply voltage (Vcc1) is output as a High driving voltage to the first electrode 20 of the electrochromic element 110, the electrochromic element 110 may be in a light-shielding state. According to an embodiment of the disclosure, when the second power supply voltage (Vcc2) is output as a Low driving voltage to the first electrode 20 of the electrochromic element 110, the electrochromic element 110 may be in a transparent state.

According to an embodiment of the disclosure, the scanning signal line supplying the scanning signal (Vscan) may be provided for each row. For example, the same scanning signal line is connected to all dimming pixels 100 in one row (e.g., dimming pixel 111 and dimming pixel 112, etc.), and a different scanning signal line may be connected to all dimming pixels 100 in another row (e.g., dimming pixel 121 and dimming pixel 122, etc.). According to an embodiment of the disclosure, substantially the same scanning signal (Vscan) may be provided to the dimming pixels 100 in the same row. According to an embodiment of the disclosure, a signal line supplying the dimming signal voltage (Vsig) may be provided for each column. For example, the same signal line is connected to all dimming pixels in one column (e.g., dimming pixel 111 and dimming pixel 121, etc.), and a different signal line may be connected to all dimming pixels in another column (e.g., dimming pixel 121 and dimming pixel 122, etc.). According to an embodiment of the disclosure, the same dimming signal voltage (Vsig) may be provided to the dimming pixels 100 in the same column. According to an embodiment of the disclosure, the dimming signal voltage (Vsig) may include a signal in which voltages for writing to each dimming pixel 100 are time-division multiplexed in synchronization with the scanning signal (Vscan). Thereby, the dimming signal voltage (Vsig) may be applied to the dimming pixels 100 for each row. For example, the dimming signal voltage (Vsig) corresponding to one frame of a dimming image may be applied to the dimming pixels 100 for each row (e.g., maintained by the capacitive element 130).

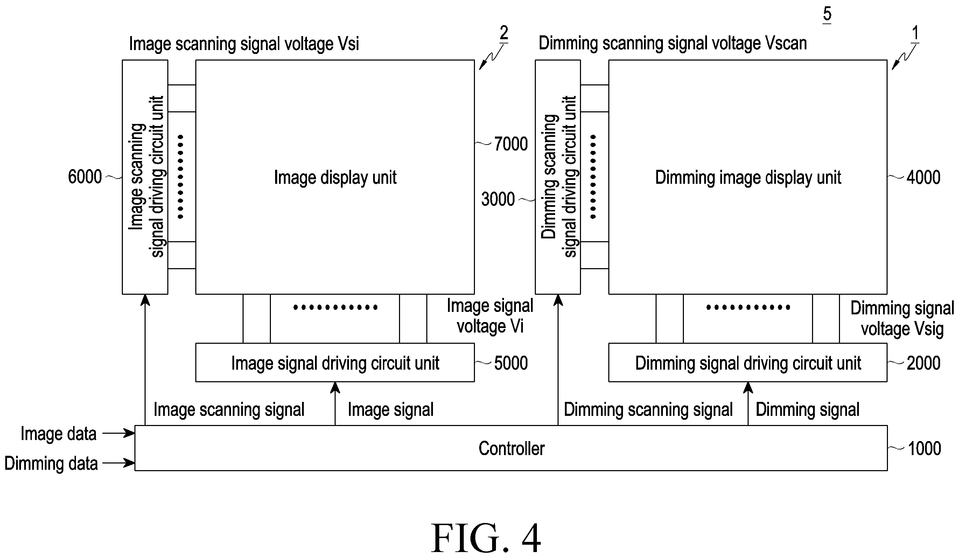

As illustrated in FIG. 3, the dimming image display device 1 may include a controller 1000, a dimming signal driving circuit unit 2000 (column driver), and a scanning signal driving circuit unit 3000 (row driver). According to an embodiment of the disclosure, the controller 1000 is configured to include a CPU, memory, storage, and a power circuit, and may control the dimming signal driving circuit unit 2000 and the scanning signal driving circuit unit 3000. According to an embodiment of the disclosure, the controller 1000 may include a computer. According to an embodiment of the disclosure, the dimming scanning signal (Vscan) may be supplied or output to each dimming pixel 100 through line by the scanning signal driving circuit unit 3000. According to an embodiment of the disclosure, the dimming signal voltage (Vsig) may be supplied or output to each dimming pixel 100 through line by the dimming signal driving circuit unit 2000. According to an embodiment of the disclosure, the first power supply voltage (Vcc1), the second power supply voltage (Vcc2), and the ground potential (Vss) may be generated by the controller 1000, e.g., and supplied to each dimming pixel 100 through line. Further, the first power supply voltage (Vcc1), the second power supply voltage (Vcc2), and the ground potential (Vss) may be supplied or output to each dimming pixel 100 through line via the dimming signal driving circuit unit 2000 or the scanning signal driving circuit unit 3000. According to an embodiment of the disclosure, the plurality of dimming pixels 100 included in the dimming image display device 1 may constitute a dimming image display unit 4000 (see FIG. 4).

### <Display Device 5>

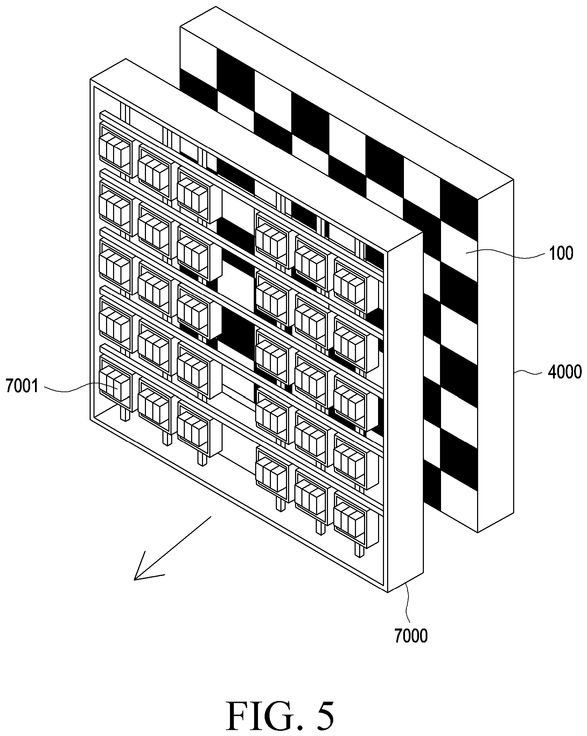

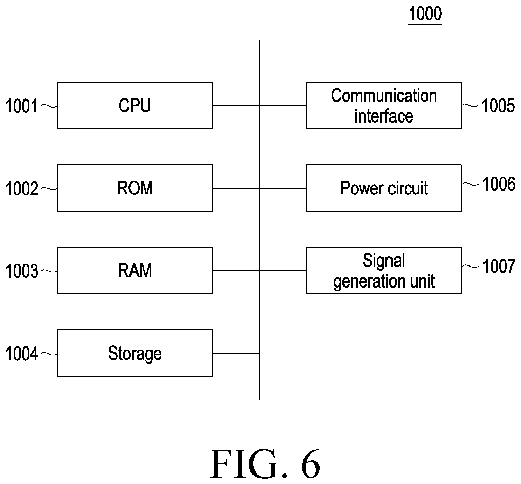

FIG. 4 is a block diagram illustrating hardware components of a display device 5 including a dimming image display device 1 and an image display device 2. FIG. 5 is a perspective view illustrating a positional relationship between the dimming image display unit 4000 of the dimming image display device 1 and the image display unit 7000 of the image display device 2. FIG. 6 is a block diagram illustrating hardware components of the controller 1000 of the display device 5.

According to an embodiment of the disclosure, the display device 5 includes the dimming image display device 1 and the image display device 2. The dimming image display device 1 includes a dimming image display unit 4000 including a plurality of dimming pixels 100. The image display device 2 includes an image display unit 7000, an image signal driving circuit unit 5000, an image scanning signal driving circuit unit 6000, and a controller 1000. Further, the dimming image display device 1 and the image display device 2 may share one controller 1000.

### <Controller 1000>

According to an embodiment of the disclosure, the controller 1000 may include a central processing unit (CPU) 1001, a read only memory (ROM) 1002, a random access memory (RAM) 1003, storage 1004, a communication interface 1005, a power circuit 1006, and a signal generation unit 1007. Each component may be interconnected via a bus.

The CPU 1001 performs control of each component of the display device 5 and various calculation processes according to programs recorded in the ROM 1002 and the storage 1004. Details of the functions of the CPU 1001 are described below.

According to an embodiment of the disclosure, the ROM 1002 may store various programs and various data.

According to an embodiment of the disclosure, the RAM 1003 may temporarily store programs and data as a work area.

According to an embodiment of the disclosure, the storage 1004 is configured with a solid state drive (SSD) or the like and may store various programs including an operating system and various data.

According to an embodiment of the disclosure, the communication interface 1005 may include an interface for communicating with other devices. As the communication interface 1005, communication interfaces according to various wired or wireless standards may be used.

According to an embodiment of the disclosure, the power circuit 1006 may generate and output power voltages (first power voltage (Vcc1), second power voltage (Vcc2), etc.). According to an embodiment of the disclosure, a bandgap reference (BGR) circuit may be used for the power circuit, for example.

According to an embodiment of the disclosure, the signal generation unit 1007 generates and outputs an image signal, an image scanning signal, a dimming signal, and a dimming scanning signal. The image signal and the image scanning signal may include a signal for displaying an image 9 on the image display unit 7000. According to an embodiment of the disclosure, the signal generation unit 1007 may generate the image signal and the image scanning signal based on image data under the control of the CPU 1001. The image signal and the image scanning signal may include a signal for displaying an image 9 on the image display unit 7000. According to an embodiment of the disclosure, the signal generation unit 1007 may generate the dimming signal and the dimming scanning signal based on dimming data under the control of the CPU 1001. According to an embodiment of the disclosure, the dimming signal and the dimming scanning signal may include a signal for displaying a dimming image 7 on the dimming image display unit 4000. According to an embodiment of the disclosure, the image data and the dimming data may be received from an external device (not illustrated) through the communication interface 1005. According to an embodiment of the disclosure, the image data may include data corresponding to the image 9. For example, the image data may include data defining the color of each pixel 7001 for each frame of the image 9. According to an embodiment of the disclosure, the dimming data may include data corresponding to the dimming image 7. For example, the dimming data may include data defining whether each dimming pixel 100 is in a light-shielding state or a transparent state for each frame of the dimming image 7.

According to an embodiment of the disclosure, the image signal driving circuit unit 5000 may generate an image signal voltage (Vi) based on the image signal output from the controller 1000 and output it to the image display unit 7000. According to an embodiment of the disclosure, the image scanning signal driving circuit unit 6000 may generate an image scanning signal voltage (Vsi) based on the image scanning signal output from the controller 1000 and output it to the image display unit 7000.

According to an embodiment of the disclosure, the image display unit 7000 includes a plurality of pixels 7001 and may display an image 9 (see FIG. 7, etc.) by the plurality of pixels 7001.

According to an embodiment of the disclosure, the dimming signal driving circuit unit 2000 may generate a dimming signal voltage (Vsig) based on the dimming signal output from the controller 1000 and output it to the dimming image display unit 4000. According to an embodiment of the disclosure, the dimming scanning signal driving circuit unit 3000 may generate a dimming scanning signal voltage (Vscan) based on the dimming scanning signal output from the controller 1000 and output it to the dimming image display unit 4000.

According to an embodiment of the disclosure, the dimming image display unit 4000 may display the dimming image 7 by the plurality of dimming pixels 100.

For example, the controller 1000 generates the first power supply voltage (Vcc1) and the second power supply voltage (Vcc2) by the power circuit, as well as various power voltages for the dimming scanning signal and the dimming signal, and may supply various signals to the dimming image display unit 4000 through the dimming signal driving circuit unit 2000 or the dimming scanning signal driving circuit unit 3000. According to an embodiment of the disclosure, the controller 1000 may supply various signals to the image display unit 7000 through the image signal driving circuit unit 5000 or the image scanning signal driving circuit unit 6000 using power voltages generated by the power circuit.

According to an embodiment of the disclosure, the dimming image display unit 4000 and the image display unit 7000 are the same size, and may be disposed so that the image 9 and the dimming image 7 overlap when viewed from a common vertical line direction (arrow direction in FIG. 5), which is a vertical line direction common to both from the dimming image display unit 4000 toward the image display unit 7000. In other words, the dimming image display unit 4000 and the image display unit 7000 may be disposed so that two vertical lines passing through their respective centers overlap. Accordingly, when viewed from the common vertical line direction, the dimming image 7 is disposed in the background of the image 9, and the background of the pixels 100 in the image 9 corresponding to the pixels 100 in the transparent state of the dimming image 7 becomes transparent. On the other hand, the background of the pixels 100 in the image 9 corresponding to the pixels 100 in the light-shielding state of the dimming image 7 becomes opaque.

According to an embodiment of the disclosure, each pixel 7001 of the image display unit 7000 may include a red light emitting element, a green light emitting element, and a blue light emitting element. Accordingly, the image display unit 7000 may display a color image 9.

According to an embodiment of the disclosure, the CPU 1001 may set the dimming pixels 100 in the region of the dimming image display unit 4000 corresponding to the object region 99 (see FIG. 7, etc.) in the image 9 (hereinafter referred to as "corresponding region 199") to a light-shielding state, and set the region of the dimming image display unit 4000 other than the corresponding region to a transparent state. In other words, the CPU 1001 may switch the transmittance of the dimming pixels 100 in the corresponding region 199 to low transmittance (e.g., second transmittance), and switch the transmittance of the region of the dimming pixels 100 other than the corresponding region 199 to high transmittance (e.g., first transmittance). The object region 99 may be arbitrarily set as a region where the background is to be in a light-shielding state. For example, the object region 99 is the region of a still image and the region where specific information or drawings are displayed.

FIG. 7 is an explanatory diagram for describing an example of a circumstance in which the display device 5 is used. In the example of FIG. 7, an embodiment where the display device 5 is used for a guide screen at a hotel front desk is exemplarily illustrated. In FIG. 7, the dimming pixels 100 in the light-shielding state are illustrated in black, and the dimming pixels 100 in the transparent state are illustrated in white.

In FIG. 7, the region of the still image where the guide text and map are displayed in the image 9 is set as the object region 99, and the dimming pixels 100 in the corresponding region 199 of the dimming image display unit 4000 corresponding to the object region 99 may be in a light-shielding state.

According to an embodiment of the disclosure, information about the object region 99 may be included in the dimming data. For example, the dimming data may include data defining whether each dimming pixel 100 is in a light-shielding state or a transparent state for each frame of the dimming image 7. Therefore, the dimming pixels 100 defined as being in a light-shielding state may correspond to the object region 99. The CPU 1001 may set the object region 99 based on the dimming data.

According to an embodiment of the disclosure, the CPU 1001 may also detect the object region 99 based on the image 9. In this case, the dimming data becomes unnecessary. According to an embodiment of the disclosure, the CPU 1001 may detect and set the region of a still image detected by, e.g., a time difference method or a background difference method as the object region 99. According to an embodiment of the disclosure, the CPU 1001 may also detect and set the region of the still image in the image 9 as the object region 99 using a trained model of a neural network that has been trained to detect the region of the still image in the image 9 from the image 9.

According to an embodiment of the disclosure, the CPU 1001 may determine whether to set the object region 99 to a light-shielding state (low transmittance). According to an embodiment of the disclosure, the CPU 1001 may determine whether to set the object region 99 to a light-shielding state based on, e.g., an instruction from the user. According to an embodiment of the disclosure, when the CPU 1001 determines to set the object region 99 to a light-shielding state, it may set the dimming pixels 100 in the corresponding region 199 to a light-shielding state. According to an embodiment of the disclosure, when the CPU 1001 determines not to set the object region to a light-shielding state, it may set all dimming pixels 100 in the dimming image display unit 400 to a transparent state.

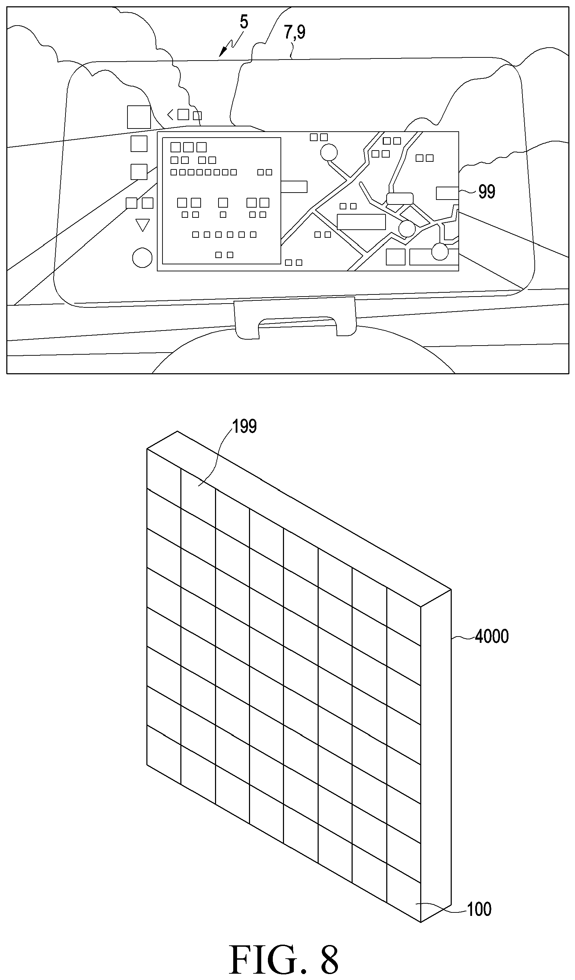

FIG. 8 is an explanatory diagram for describing another example of a circumstance in which the display device 5 is used. In the example of FIG. 8, an embodiment where the display device 5 is used for a navigation screen disposed in front of a vehicle windshield is exemplarily illustrated. In FIG. 8, the dimming pixels 100 in the transparent state are illustrated in white.

In FIG. 8, by determining by the CPU 1001 not to set the object region 99 to a light-shielding state, all dimming pixels 100 including the dimming pixels 100 in the corresponding region 199 corresponding to the object region 99 of the still image illustrating road traffic information and maps in the image 9 are in a transparent state.

In the present embodiment, a thin film transistor (TFT) having enhance characteristics may be used for the CMOS circuit of the driving circuit 120. For example, the CMOS circuit of the driving circuit 120 may include a PMOS (p-channel MOS transistor) and an NMOS (n-channel MOS transistor) having enhance characteristics. An electrochromic element 110 according to an embodiment of the present document may include a current-driven element (e.g., an element that requires current to be applied to switch between a transparent state (ON state) and a light-shielding state (OFF state)). Therefore, a PMOS (e.g., p-channel MOS transistor) and an NMOS (e.g., n-channel MOS transistor) may be required for polarity reversal of the electrochromic element 110.

According to various embodiments of the present document, when the driving circuit 120 switches the driving voltage (e.g., when changing from the first transmittance to the second transmittance), shoot-through current that may flow in the CMOS circuit of the driving circuit 120 may be suppressed. And by preventing this uncontrolled shoot-through current from flowing into the electrochromic element 110, instability of the operation 110 of the electrochromic element 110 may be prevented.

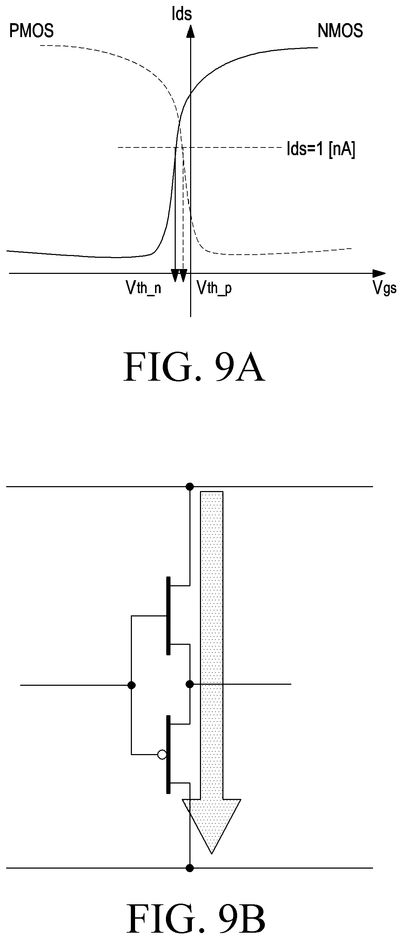

FIGS. 9A to 9C are explanatory diagrams of a comparative example for describing shoot-through current flowing in a CMOS circuit using TFTs having depression characteristics (e.g., a circuit related to a depression-type MOSFET).

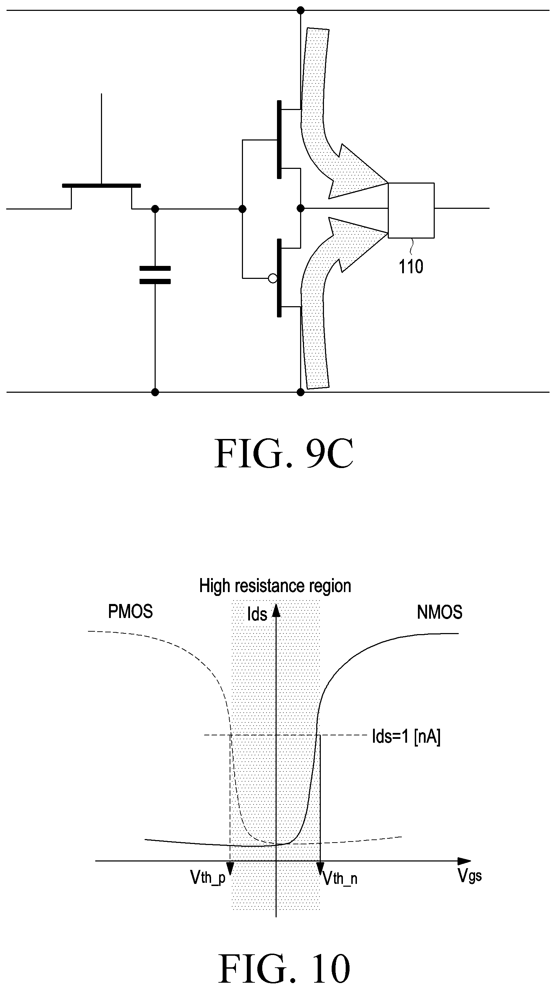

FIG. 9A illustrates transfer characteristics of PMOS and NMOS having depression characteristics. FIG. 9B illustrates shoot-through current flowing in a CMOS circuit using TFTs having depression characteristics. FIG. 9C illustrates shoot-through current flowing in an electrochromic element 110 connected to a CMOS circuit. As illustrated in FIG. 9A, PMOS and NMOS having depression characteristics do not turn OFF when the gate-source voltage (Vgs) is 0V, and drain current (Ids) flows. Therefore, when the input to the CMOS circuit switches from High to Low, both PMOS and NMOS cause current to flow (e.g., turn ON) near their respective gate threshold voltages (Vth_p, Vth_n), causing drain current (Ids) to flow. This causes shoot-through current illustrated by the arrow in FIG. 9B. As illustrated in FIG. 9C, when the electrochromic element 110 is connected to the CMOS circuit, uncontrolled shoot-through current illustrated by the arrow flows into the electrochromic element 110, making the operation of the electrochromic element 110 unstable.

FIG. 10 is a view illustrating transfer characteristics of PMOS and NMOS of the CMOS circuit of the driving circuit 120 of the present embodiment. As illustrated in FIG. 10, PMOS and NMOS having enhance characteristics turn OFF when the gate-source voltage (Vgs) is 0V, and drain current (Ids) does not flow. Therefore, when the input to the driving circuit 120 switches from High to Low, both PMOS and NMOS turn OFF and do not cause drain current (Ids) to flow. For example, the CMOS circuit of the driving circuit 120 becomes high resistance in the region where the input driving voltage (corresponding to Vgs) is between the gate threshold voltage (Vth_p) of PMOS and the gate threshold voltage (Vth_n) of NMOS. Therefore, even when the dimming signal voltage (Vsig) input to the driving circuit 120 is switched, generation of shoot-through current may be suppressed.

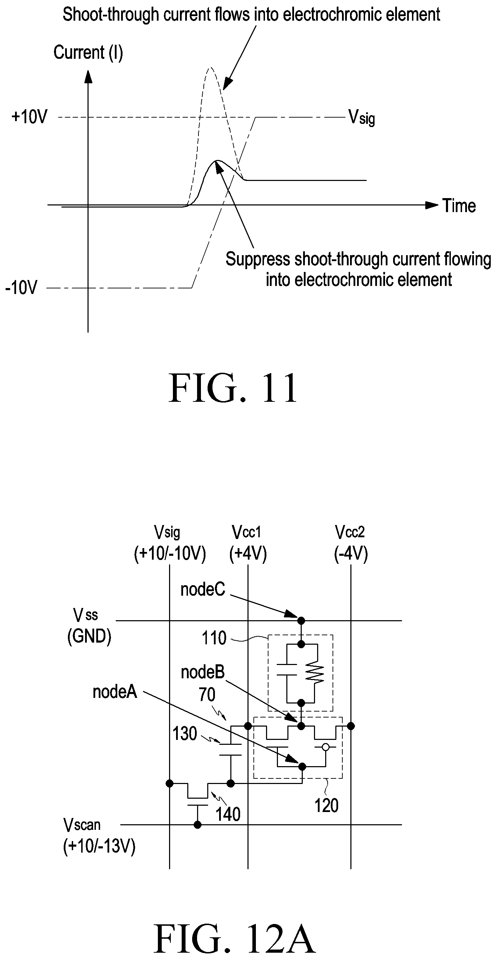

FIG. 11 is a view illustrating shoot-through current generated when the dimming signal voltage (Vsig) input to the driving circuit 120 is switched. In FIG. 11, the dashed line illustrates shoot-through current flowing in the CMOS circuit of the comparative example. The solid line illustrates shoot-through current flowing in the CMOS circuit of the driving circuit 120 of the present embodiment. Since the CMOS circuit of the comparative example is composed of PMOS and NMOS having depression characteristics, relatively large shoot-through current is generated, and the shoot-through current flows into the electrochromic element 110, making the operation of the electrochromic element 110 unstable. On the other hand, since the CMOS circuit of the driving circuit 120 of the present embodiment is composed of PMOS and NMOS having enhance characteristics, shoot-through current may be suppressed.

The dimming image display device 1 displays a dimming image by setting the electrochromic element 110 of each dimming pixel to a light-shielding state or a transparent state for each frame of the dimming image based on the dimming image data.

### <Operation of Applying Dimming Signal Voltage (Vsig) to Dimming Pixel 100>

The operation of applying the dimming signal voltage (Vsig) to the dimming pixel 100 is described.

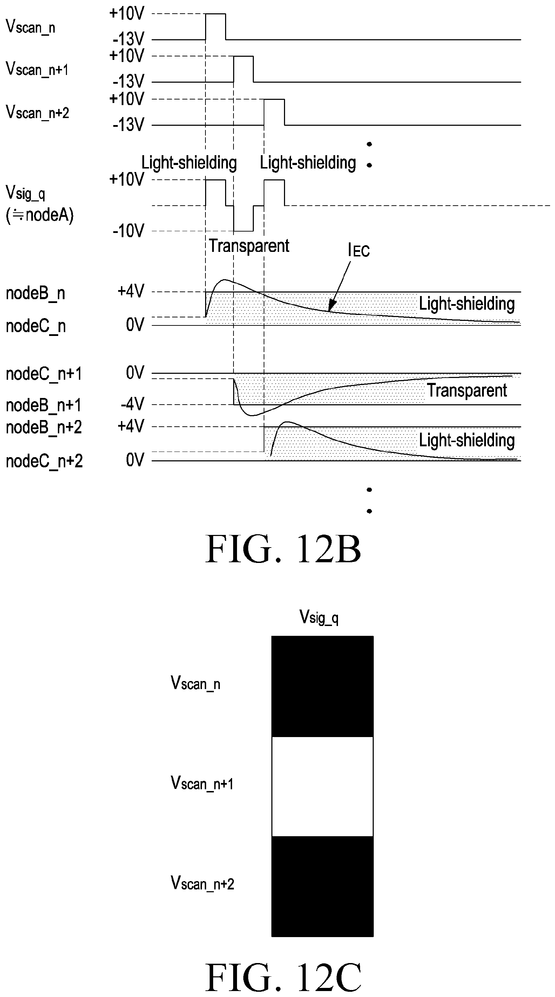

FIG. 12A is a view illustrating the dimming pixel circuit 70 of the dimming pixel 100. In FIG. 12A, the electrochromic element 110 is also illustrated. FIG. 12B is a view illustrating a timing chart of the operation of applying the dimming signal voltage (Vsig) to the dimming pixel 100. FIG. 12C is a view illustrating the state of the electrochromic element 110 of the dimming pixel 100 to which the dimming signal voltage (Vsig) is written in the timing chart of FIG. 12B. In FIG. 12C, the light-shielding state is illustrated in black, and the transparent state is illustrated in white.

FIG. 12B illustrates a timing chart for writing the dimming signal voltage (Vsig) to each of any three dimming pixels 100 disposed in the column direction. n, n+1, n+2 indicate row numbers. Hereinafter, for simplicity of description, the description will focus on the operation of writing the dimming signal voltage (Vsig) to the dimming pixels 100 of row numbers n, n+1, n+2 in any one column.

As described above, the scanning signal line supplying the scanning signal (Vscan) is provided for each row. Therefore, the dimming signal voltage (Vsig) is written to the dimming pixel 100 for each row. When the scanning signal is High (+10V), the switching transistor 140 conducts, the dimming signal voltage (Vsig) is maintained in the capacitive element 130, and the dimming signal voltage (Vsig) is written to the dimming pixel 100. In the example of FIG. 12B, the dimming signal voltage (Vsig) is written to the dimming pixels 100 in the order of row n, row n+1, row n+2. The scanning signal (Vscan) for writing the dimming signal voltage (Vsig) to the dimming pixel 100 of row n is indicated as Vscan_n. The scanning signal (Vscan) for writing the dimming signal voltage (Vsig) to the dimming pixel 100 of row n+1 is indicated as Vscan _n+1. The scanning signal (Vscan) for writing the dimming signal voltage (Vsig) to the dimming pixel 100 of row n+2 is indicated as Vscan_n2.

The dimming signal voltage (Vsig) is time-division multiplexed with the dimming signal voltage (Vsig) for writing to each dimming pixel 100. In the example of FIG. 12B, the time-division multiplexed dimming signal voltage (Vsig) is illustrated with the dimming signal voltage (Vsig (+10V)) for setting the dimming pixel 100 of row n to a light-shielding state, the dimming signal voltage (Vsig (-10V)) for setting the dimming pixel 100 of row n+1 to a transparent state, and the dimming signal voltage (Vsig (+10V)) for setting the dimming pixel 100 of row n+2 to a light-shielding state.

The dimming signal voltage (Vsig) is sequentially written to the dimming pixels 100 of each row at the timing when the switching transistor 140 of each row sequentially conducts by the scanning signal (Vscan). As a result, by maintaining the dimming signal voltage (Vsig) in the capacitive element 130, nodeA becomes a voltage corresponding to the dimming signal voltage (Vsig). Specifically, when the dimming signal voltage (Vsig) for setting the electrochromic element 110 of the dimming pixel 100 to a light-shielding state is written, nodeA becomes +10V. When the dimming signal voltage (Vsig) for setting the electrochromic element 110 of the dimming pixel 100 to a transparent state is written, nodeA becomes -10V.

NodeB of the dimming pixel 100 of row n becomes the driving voltage (+4V) output by the driving circuit 120 according to the dimming signal voltage (Vsig) by writing the dimming signal voltage (Vsig (+10V)) for setting the electrochromic element 110 of the dimming pixel 100 of row n to a light-shielding state to the dimming pixel 100. Further, FIG. 12B also illustrates the voltage of nodeC which is the ground potential (Vss). NodeB of the dimming pixel 100 of row n+1 becomes the driving voltage (-4V) output by the driving circuit 120 according to the dimming signal voltage (Vsig) by writing the dimming signal voltage (Vsig (-10V)) for setting the electrochromic element 110 of the dimming pixel 100 of row n+1 to a transparent state to the dimming pixel 100. NodeB of the dimming pixel 100 of row n+2 becomes the driving voltage (+4V) output by the driving circuit 120 according to the dimming signal voltage (Vsig) by writing the dimming signal voltage (Vsig (+10V)) for setting the dimming pixel 100 of row n+2 to a light-shielding state to the dimming pixel 100.

According to the driving voltage (voltage of nodeB), the state of the electrochromic element 110 of each dimming pixel 100 is switched. In FIG. 12B, the current (I_{EC}) flowing through the electrochromic element 110 when the state of the electrochromic element 110 is switched is illustrated.

As illustrated in FIG. 12C, by inputting the scanning signal (Vscan_n) to the dimming pixel 100 of row n and writing the dimming signal voltage (Vsig), the electrochromic element 110 of the dimming pixel 100 of row n becomes a light-shielding state. By inputting the scanning signal (Vscan_n+1) to the dimming pixel 100 of row n+1 and writing the dimming signal voltage (Vsig), the electrochromic element 110 of the dimming pixel 100 of row n+1 becomes a transparent state. By inputting the scanning signal (Vscan_n+2) to the dimming pixel 100 of row n+2 and writing the dimming signal voltage (Vsig), the electrochromic element 110 of the dimming pixel 100 of row n+2 becomes a light-shielding state.

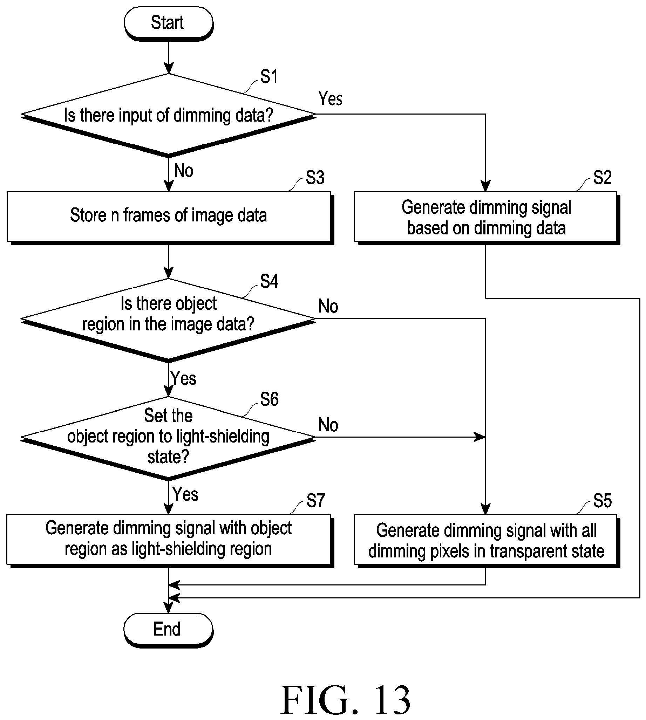

FIG. 13 is a view illustrating a flowchart of the operation of the display device 5. This flowchart may be executed by the CPU 1001 based on a program.

The CPU 1001 determines whether there is an input of dimming data (S1). In other words, the CPU 1001 determines whether dimming data has been input by the communication interface 1005.

When the CPU 1001 determines that there is an input of dimming data (S1: YES), it generates a dimming signal and a dimming scanning signal based on the dimming data (S2).

When the CPU 1001 determines that there is no input of dimming data (S1: NO), it stores n frames of image data in the storage 1004 (S3). n may be set according to the response speed of the electrochromic element. For example, the CPU 1001 stores image data every 10 frames. The controller 1000 stores n frames of image data and may sequentially update the stored image data with new image data.

The CPU 1001 determines whether there is an object region 99 in the image 9 based on the n frames of image data (S4). When the CPU 1001 determines that there is no object region 99 (S4: NO), it generates a dimming signal with all dimming pixels 100 in a transparent state (S5). In step S5, a dimming signal with all dimming pixels 100 in a light-shielding state may be generated.

When the CPU 1001 determines that there is an object region 99 in the image 9 (S4: YES), it determines whether to set the corresponding region 199 corresponding to the object region 99 to a light-shielding state (S6). When the CPU 1001 determines not to set the corresponding region 199 corresponding to the object region 99 to a light-shielding state (S6: NO), it generates a dimming signal with all dimming pixels 100 in a transparent state (S5). As described above, in step S5, a dimming signal with all dimming pixels 100 in a light-shielding state may be generated.

When the CPU 1001 determines to set the corresponding region 199 corresponding to the object region 99 to a light-shielding state (S6: YES), it generates a dimming signal with the dimming pixels 100 of the corresponding region 199 corresponding to the object region 99 in a light-shielding state (S7).

### (Second Embodiment)

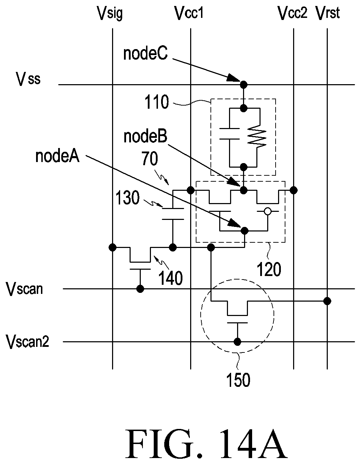

The second embodiment is described. The difference between the present embodiment and the first embodiment is that the present embodiment is provided with a reset circuit 150 (see FIG. 14A) for floating the output of the driving circuit 120 at a predetermined timing. Since other aspects of the present embodiment are the same as the first embodiment, overlapping descriptions are omitted or simplified.

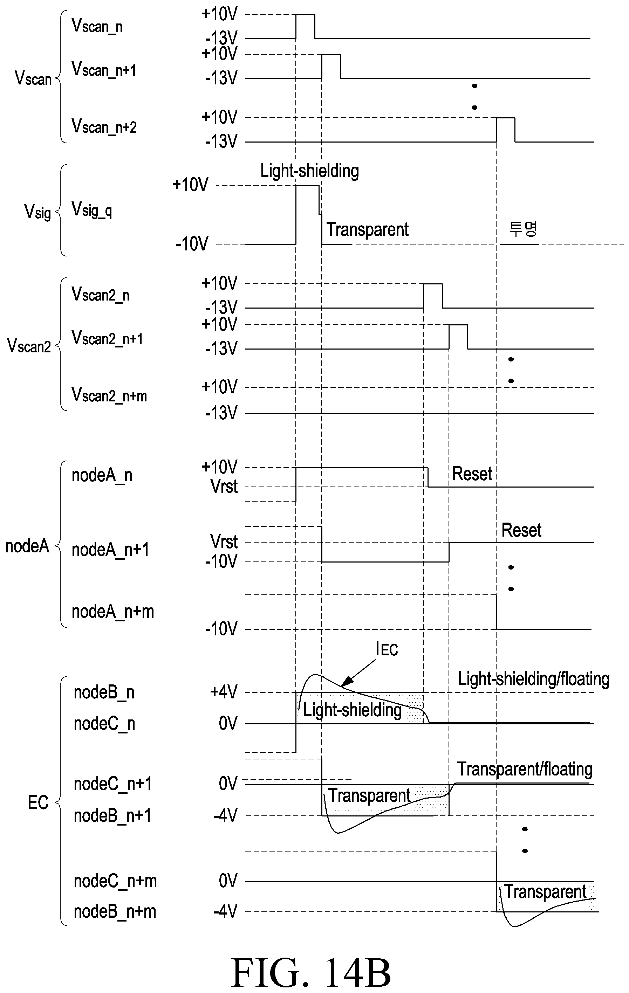

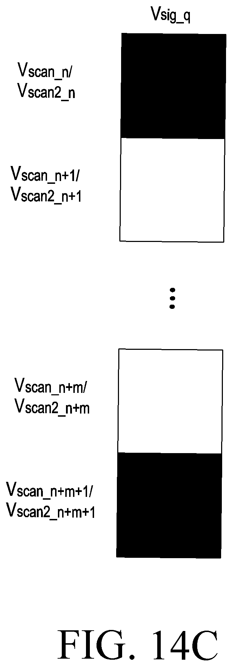

FIG. 14A is a view illustrating the dimming pixel circuit 70 of the dimming pixel 100. In FIG. 14A, the electrochromic element 110 is also illustrated. FIG. 14B is a view illustrating a timing chart of the write operation of the dimming signal voltage (Vsig) to the dimming pixel 100. FIG. 14C is a view illustrating the state of the electrochromic element 110 of the dimming pixel 100 to which the dimming signal voltage (Vsig) is written in the timing chart of FIG. 14B. In FIG. 14C, the light-shielding state is illustrated in black, and the transparent state is illustrated in white.

As illustrated in FIG. 14A, the dimming pixel circuit 70 may include a driving circuit 120, a capacitive element 130, a switching transistor 140, and a reset circuit 150. The reset circuit 150 is connected between the input of the driving circuit 120 and a reset voltage line supplied with a reset voltage (Vrst). The reset circuit 150 outputs the supplied reset voltage (Vrst) to the input of the driving circuit 120 when a reset signal (Vscan2) is input from a reset signal line. The reset voltage (Vrst) is a voltage that is input to the input of the driving circuit 120 to float the output of the driving circuit 120. In other words, the reset voltage (Vrst) is a voltage that turns OFF both the PMOS and NMOS of the CMOS circuit of the driving circuit 120 by being input to the input of the driving circuit 120. The reset circuit 150 may be composed of, e.g., an NMOS. In this case, the source electrode of the NMOS of the reset circuit 150 is connected to the reset voltage line, the drain electrode is connected to the input of the driving circuit 120, and the gate electrode is connected to the reset signal line.

The reset signal line supplying the reset signal (Vscan2) may be provided for each row. Therefore, the output of the driving circuit 120 may be floated based on the reset signal (Vscan2) for each row. By floating the output of the driving circuit 120, one electrode of the electrochromic element 110 becomes floating, so leakage current flowing through the electrochromic element 110 may be blocked. The leakage current flowing through the electrochromic element 110 continues to flow even after the state of the electrochromic element 110 is switched to either light-shielding or transparent. As a result, the leakage current flowing through the electrochromic element 110 of each dimming pixel 100 flows to the first power supply voltage (Vcc1) to which the other electrode of the electrochromic element 110 is connected, causing a voltage drop in the first power supply voltage (Vcc1). This increases the reaction time (time required for state switching) of the electrochromic element 110. In the present embodiment, at the timing when the electrochromic element 110 of the dimming pixel 100 is switched from a transparent state to a light-shielding state or from a light-shielding state to a transparent state (timing when the reaction time elapses), the leakage current flowing through the electrochromic element 110 is blocked by the reset signal (Vscan2). Thereby, the voltage drop of the first power supply voltage (Vcc1) due to leakage current may be suppressed, and an increase in the reaction time of the electrochromic element 110 may be prevented.

FIG. 14B illustrates a timing chart for writing the dimming signal voltage (Vsig) to each of any plurality of dimming pixels 100 disposed in the column direction. n, n+1, ..., n+m indicate row numbers. Hereinafter, for simplicity of description, similar to the description in the first embodiment, the description will focus on the write operation of the dimming signal voltage (Vsig) to the dimming pixels 100 of row numbers n, n+1, ..., n+m in any one column. In FIG. 14B, the subscript q of the dimming signal voltage (Vsig) indicates the column number of the corresponding any one column.

The scanning signal line supplying the scanning signal (Vscan) is provided for each row. Therefore, the dimming signal voltage (Vsig) is written to the dimming pixel 100 for each row. When the scanning signal is High (+10V), the switching transistor 140 conducts, and the dimming signal voltage (Vsig) is maintained in the capacitive element 130, whereby the dimming signal voltage (Vsig) is written to the dimming pixel 100. In the example of FIG. 14B, the dimming signal voltage (Vsig) is written to the dimming pixels 100 in the order of row n, row n+1, ..., row n+m. The scanning signal (Vscan) for writing the dimming signal voltage (Vsig) to the dimming pixel 100 of row n is indicated as Vscan_n. The scanning signal (Vscan) for writing the dimming signal voltage (Vsig) to the dimming pixel 100 of row n+1 is indicated as Vscan _n+1. The scanning signal (Vscan) for writing the dimming signal voltage (Vsig) to the dimming pixel 100 of row n+m is indicated as Vscan_n+m.

The dimming signal voltage (Vsig) is time-division multiplexed with the dimming signal voltage (Vsig) for writing to each dimming pixel 100. In the example of FIG. 14B, the time-division multiplexed dimming signal voltage (Vsig) is illustrated with the dimming signal voltage (Vsig (+10V)) for setting the dimming pixel 100 of row n to a light-shielding state and the dimming signal voltage (Vsig (-10V)) for setting the dimming pixel 100 of row n+1 to a transparent state.

The dimming signal voltage (Vsig) is sequentially written to the dimming pixels 100 of each row at the timing when the switching transistor 140 of each row sequentially conducts by the scanning signal (Vscan). As a result, by maintaining the dimming signal voltage (Vsig) in the capacitive element 130, nodeA becomes a voltage corresponding to the dimming signal voltage (Vsig).

NodeB of the dimming pixel 100 of row n becomes the driving voltage (+4V) output by the driving circuit 120 according to the dimming signal voltage (Vsig) by writing the dimming signal voltage (Vsig (+10V)) for setting the dimming pixel 100 of row n to a light-shielding state to the dimming pixel 100. Further, FIG. 14B also illustrates the voltage of nodeC which is the ground potential (Vss). NodeB of the dimming pixel 100 of row n+1 becomes the driving voltage (-4V) output by the driving circuit 120 according to the dimming signal voltage (Vsig) by writing the dimming signal voltage (Vsig (-10V)) for setting the dimming pixel 100 of column n+1 to a transparent state to the dimming pixel 100. NodeB of the dimming pixel 100 of column n+m becomes the driving voltage (-4V) output by the driving circuit 120 according to the dimming signal voltage (Vsig) by writing the dimming signal voltage (Vsig (-10V)) for setting the dimming pixel 100 of column n+m to a transparent state to the dimming pixel 100.

At the timing when the electrochromic element 110 of the dimming pixel 100 is switched from a transparent state to a light-shielding state or from a light-shielding state to a transparent state, the output of the driving circuit 120 of the dimming pixel 100 is floated by the reset signal (Vscan2). In the example of FIG. 14B, e.g., after the state of the electrochromic element 110 of the dimming pixel 100 of row n is switched, by setting the reset signal (Vscan2) to the dimming pixel 100 of row n to High, the voltage of the input (nodeA) of the driving circuit 120 is set to the reset voltage (Vrst) (e.g., 0V). Accordingly, the output (nodeB) of the driving circuit 120 is floated. In other words, the timing for setting the reset signal (Vscan2) to High is after the electrochromic element 110 of the dimming pixel 100 of one row has switched to either a transparent state or a light-shielding state. This timing is preferably a timing when the scanning signal that turns on the switching transistor 140 is not input to the input of the switching transistor 140 of any dimming pixel 100. This timing may be adjusted by trimming based on experiments or the like.

According to the driving voltage (voltage of nodeB), the state of the electrochromic element 110 of each dimming pixel 100 is switched. In FIG. 14B, the current (I_{EC}) flowing through the electrochromic element 110 when the state of the electrochromic element 110 is switched is illustrated. In the dimming pixel 100 to which the reset signal (Vscan2) is input, the current (I_{EC}) stops flowing after the reset signal (Vscan2) is input.

As illustrated in FIG. 14C, by inputting the scanning signal (Vscan_n) to the dimming pixel 100 of row n and writing the dimming signal voltage (Vsig), the electrochromic element 110 of the dimming pixel 100 of row n becomes a light-shielding state. In this case, the reset signal (Vscan2) is not input to the dimming pixel 100 of row n. By inputting the scanning signal (Vscan_n+1) to the dimming pixel 100 of row n+1 and writing the dimming signal voltage (Vsig), the electrochromic element 110 of the dimming pixel 100 of row n+1 becomes a transparent state. In this case, the reset signal (Vscan2) is not input to the dimming pixel 100 of row n+1. By inputting the scanning signal (Vscan_n+m) to the dimming pixel 100 of row n+m and writing the dimming signal voltage (Vsig), the electrochromic element 110 of the dimming pixel 100 of row n+m becomes a transparent state. In this case, the reset signal (Vscan2) is not input to the dimming pixel 100 of row n+m. By inputting the scanning signal (Vscan_n+m+1) to the dimming pixel 100 of row n+m+1 and writing the dimming signal voltage (Vsig), the electrochromic element 110 of the dimming pixel 100 of row n+m+1 becomes a light-shielding state. In this case, the reset signal (Vscan2) is not input to the dimming pixel 100 of row n+m+1.

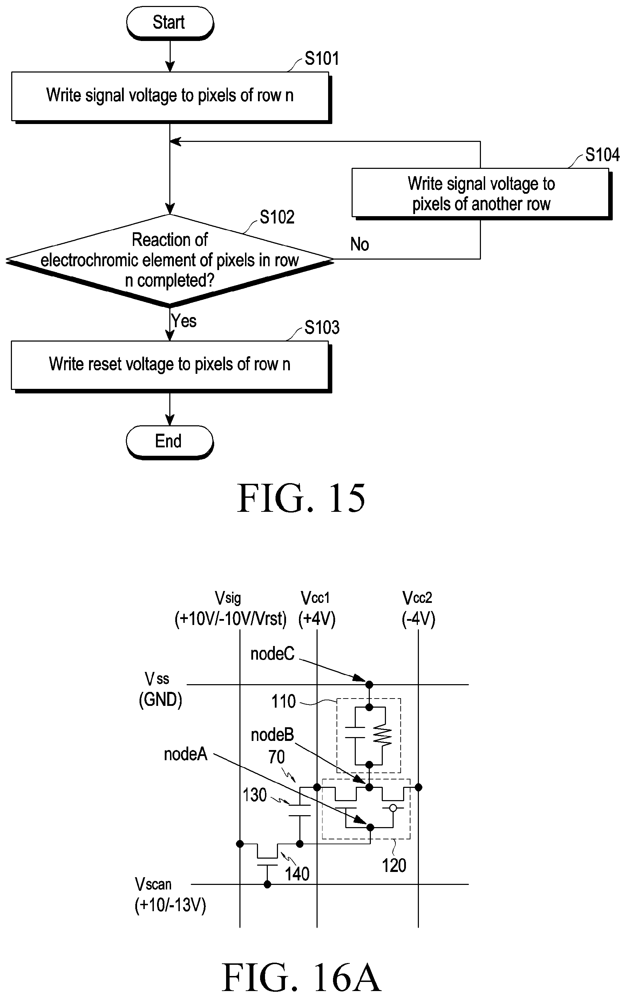

FIG. 15 is a view illustrating a flowchart of the operation of the dimming image display device 1. This flowchart may be executed by the controller 1000 based on a program.

The controller 1000 writes the dimming signal voltage (Vsig) to the dimming pixel 100 of any row n (S101).

The controller 1000 determines whether the reaction of the electrochromic element 110 of the dimming pixel 100 of row n is completed (S102). In other words, the controller 1000 determines whether the switching of the electrochromic element 110 of the dimming pixel 100 of row n from a transparent state to a light-shielding state or from a light-shielding state to a transparent state is completed. Further, determining whether the switching operation is completed may use the response time of the electrochromic element 110 (response time changing from transparent state to light-shielding state, or response time changing from light-shielding state to transparent state) obtained experimentally in advance based on the size of the dimming pixel 100, the characteristics of the electrochromic element 110, and other ambient temperature dependencies, and this data may be stored in the storage 1004 of the controller 1000 for use. According to an embodiment of the disclosure, the electrochromic element 110 may need to receive current as described above. Thus, as current is supplied, delay due to voltage drop (IR-Drop) may occur. However, according to the display device according to various embodiments of the disclosure, since it is divided for each dimming pixel 100, the pixel area may be relatively small, so it may be less affected by voltage drop. Further, as the display device (e.g., electrochromic element 110) may be partially set to an Off state, the response time may be decreased compared to conventional technology that should switch the entire screen to an Off state.

When the controller 1000 determines that the reaction of the electrochromic element 110 of the dimming pixel 100 of row n is not completed (S102: NO), it writes the dimming signal voltage (Vsig) to the dimming pixel 100 of another row (e.g., the row below row n) (S104).

When the controller 1000 determines that the reaction of the electrochromic element 110 of the dimming pixel 100 of row n is completed (S102: YES), it writes the reset voltage (Vrst) to the dimming pixel 100 of row n (S103).

### (Third Embodiment)

The third embodiment is described. The difference between the present embodiment and the second embodiment is that the present embodiment does not use the reset circuit 150, but floats the output of the driving circuit 120 at a predetermined timing by superimposing the reset voltage (Vrst) on the dimming signal voltage (Vsig) by time-division multiplexing. Since other aspects of the present embodiment are the same as the second embodiment, overlapping descriptions are omitted or simplified.

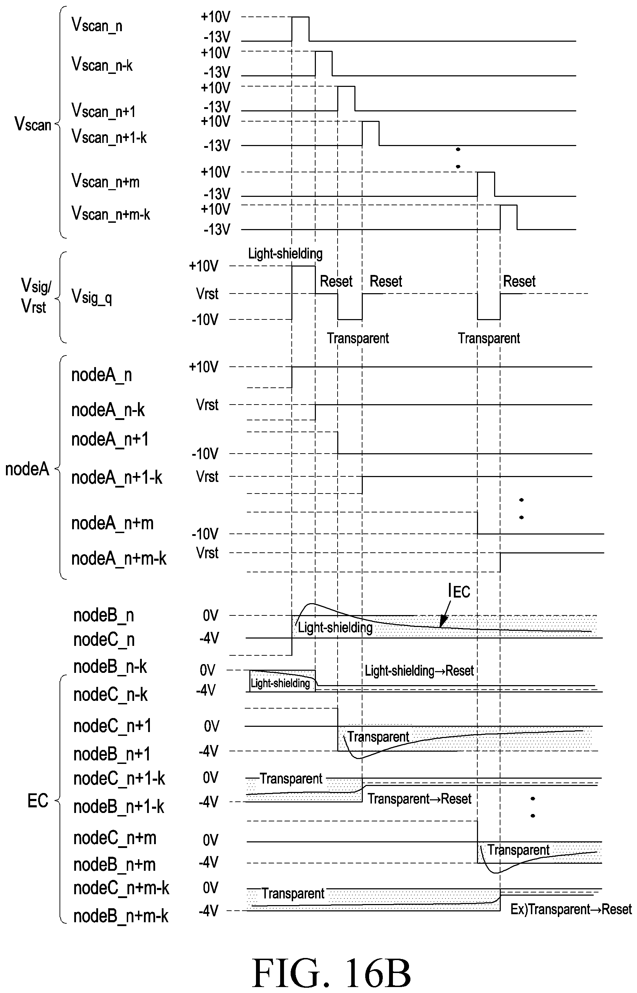

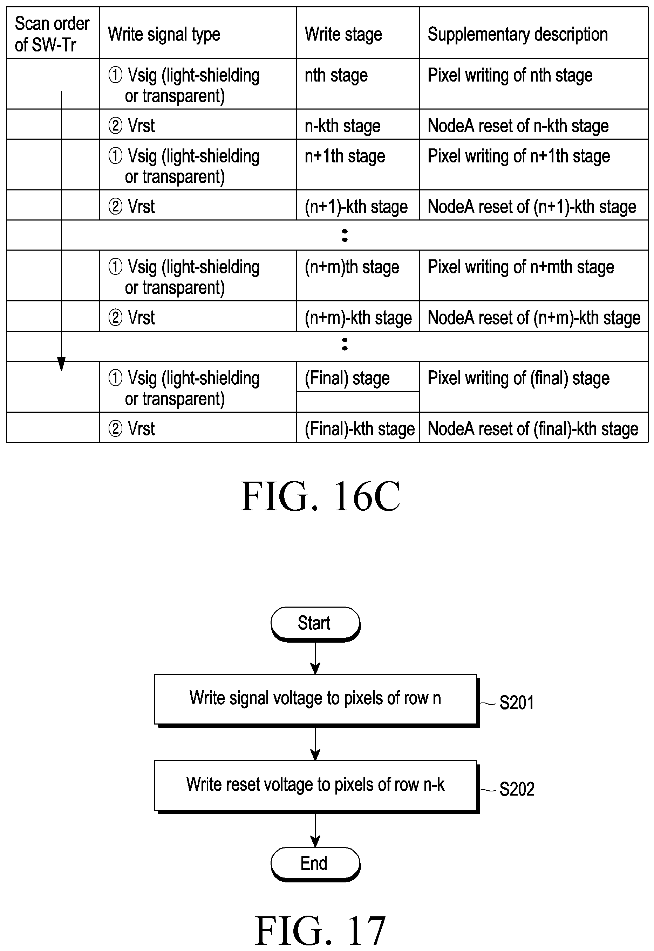

FIG. 16A is a view illustrating the dimming pixel circuit 70 of the dimming pixel 100. The dimming pixel circuit 70 of the present embodiment is the same as that of the first embodiment. In FIG. 16A, the electrochromic element 110 is also illustrated. FIG. 16B is a view illustrating a timing chart of the write operation of the dimming signal voltage (Vsig) to the dimming pixel 100. FIG. 16C is an explanatory diagram for describing the order for each row of writing the dimming signal voltage (Vsig) and the reset voltage (Vrst) to the dimming pixel 100.

As illustrated in FIG. 16A, the dimming pixel circuit 70 may include a driving circuit 120, a capacitive element 130, and a switching transistor 140. Since there is no reset circuit 150, the aperture ratio of the dimming pixel 100 may be increased compared to the second embodiment. The aperture ratio is defined as the value obtained by dividing the area of the electrochromic element 110 by the area of the dimming pixel 100.

FIG. 16B illustrates a timing chart for writing the dimming signal voltage (Vsig) to each of any plurality of dimming pixels 100 disposed in the column direction. n, n+1, ..., n+m indicate row numbers. Hereinafter, for simplicity of description, similar to the description in the first embodiment, the description will focus on the write operation of the dimming signal voltage (Vsig) to the dimming pixels 100 of row numbers n, n+1, ..., n+m in any one column. In FIG. 16B, the subscript q of the dimming signal voltage (Vsig) indicates the column number of any one column.

The scanning signal line supplying the scanning signal (Vscan) is provided for each row. Therefore, the dimming signal voltage (Vsig) is written to the dimming pixel 100 for each row. When the scanning signal is High (+10V), the switching transistor 140 conducts, the dimming signal voltage (Vsig) is maintained in the capacitive element 130, and the dimming signal voltage (Vsig) is written to the dimming pixel 100. In the example of FIG. 16B, the dimming signal voltage (Vsig) is written to the dimming pixels 100 in the order of row n, row n+1, ..., row n+m. The scanning signal (Vscan) for writing the dimming signal voltage (Vsig) to the dimming pixel 100 of row n is indicated as Vscan_n. The scanning signal (Vscan) for writing the dimming signal voltage (Vsig) to the dimming pixel 100 of row n+1 is indicated as Vscan _n+1. The scanning signal (Vscan) for writing the dimming signal voltage (Vsig) to the dimming pixel 100 of row n+m is indicated as Vscan_n+m.

The dimming signal voltage (Vsig) is time-division multiplexed with the dimming signal voltage (Vsig) for writing to each dimming pixel 100. In the example of FIG. 16B, the time-division multiplexed dimming signal voltage (Vsig) is illustrated with the dimming signal voltage (Vsig (+10V)) for setting the dimming pixel 100 of row n to a light-shielding state and the dimming signal voltage (Vsig (-10V)) for setting the dimming pixel 100 of row n+1 to a transparent state.

In the present embodiment, the reset voltage (Vrst) is further superimposed on the dimming signal voltage (Vsig) by time-division multiplexing. The reset voltage (Vrst) superimposed on the dimming signal voltage (Vsig) is written to the dimming pixel 100 by the switching transistor 140 of the dimming pixel 100 conducting by the scanning signal (Vscan) and being maintained in the capacitive element 130 of the dimming pixel 100.

The dimming signal voltage (Vsig) is sequentially written to the dimming pixels 100 of each row at the timing when the switching transistor 140 of each row sequentially conducts by the scanning signal (Vscan). As a result, by maintaining the dimming signal voltage (Vsig) in the capacitive element 130, nodeA becomes a voltage corresponding to the dimming signal voltage (Vsig).

After the dimming signal voltage (Vsig) is written to the dimming pixel 100 of one row (e.g., row n), at the timing before the dimming signal voltage (Vsig) is written to the next row (e.g., row n+1), the dimming signal voltage (Vsig) is set to the reset voltage (Vrst), and the output of the driving circuit 120 of the dimming pixel 100 of row n-k, which is k rows before (k stages up) the corresponding one row, is floated. Row n-k is the row where the electrochromic element 110 is switching from a transparent state to a light-shielding state or from a light-shielding state to a transparent state (reaction is being completed) when the dimming signal voltage (Vsig) is written to the dimming pixel 100 of row n. Row n-k is preferably the row closest to row n among the rows where the electrochromic element 110 is switching from a transparent state to a light-shielding state or from a light-shielding state to a transparent state when the dimming signal voltage (Vsig) is written to the dimming pixel 100 of row n. The value of k may be determined based on experiments or the like.

As illustrated in FIG. 16C, e.g., after the dimming signal voltage (Vsig) is written to the dimming pixel 100 of the nth stage (row n), the reset voltage (Vrst) is written to the dimming pixel of the n-kth stage (row n-k). And this writing of the dimming signal voltage (Vsig) and the reset voltage (Vrst) is repeated up to the final stage (final row).

In the example of the timing chart of FIG. 16B, nodeB of the dimming pixel 100 of row n becomes the driving voltage (+4V) output by the driving circuit 120 according to the dimming signal voltage (Vsig) by writing the dimming signal voltage (Vsig (+10V)) for setting the dimming pixel 100 of row n to a light-shielding state to the dimming pixel 100. Further, FIG. 16B also illustrates the voltage of nodeC which is the ground potential (Vss). NodeB of the dimming pixel 100 of row n+1 becomes the driving voltage (-4V) output by the driving circuit 120 according to the dimming signal voltage (Vsig) by writing the dimming signal voltage (Vsig (-10V)) for setting the dimming pixel 100 of row n+1 to a transparent state to the dimming pixel 100. NodeB of the dimming pixel 100 of row n+m becomes the driving voltage (-4V) output by the driving circuit 120 according to the dimming signal voltage (Vsig) by writing the dimming signal voltage (Vsig (-10V)) for setting the dimming pixel 100 of row n+m to a transparent state to the dimming pixel 100.

According to the driving voltage (voltage of nodeB), the state of the electrochromic element 110 of each dimming pixel 100 is switched. In FIG. 16B, the current (I_{EC}) flowing through the electrochromic element 110 when the state of the electrochromic element 110 is switched is illustrated. In the dimming pixel 100 to which the reset voltage (Vrst) is written, the current (I_{EC}) stops flowing after the reset voltage (Vrst) is written.

FIG. 17 is a view illustrating a flowchart of the operation of the dimming image display device 1. This flowchart may be executed by the controller 1000 based on a program.

The controller 1000 writes the dimming signal voltage (Vsig) to the dimming pixel 100 of any row n (S201).

The controller 1000 writes the reset voltage to the dimming pixel 100 of row n-k (S202). As described above, row n-k is the row where the electrochromic element 110 has switched from a transparent state to a light-shielding state or from a light-shielding state to a transparent state when the dimming signal voltage (Vsig) is written to the dimming pixel 100 of row n. The value of k may be stored in advance in the storage of the controller 1000 for use.

### (Fourth Embodiment)

The fourth embodiment is described. The difference between the present embodiment and the first embodiment is that the present embodiment does not write the dimming signal voltage (Vsig) to the dimming pixel 100 when the dimming pixel 100 that is in a transparent state in one frame of the dimming image will also be in a transparent state in the next frame. Since other aspects of the present embodiment are the same as the first embodiment, overlapping descriptions are omitted or simplified.

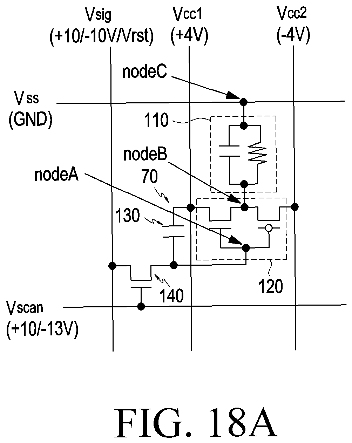

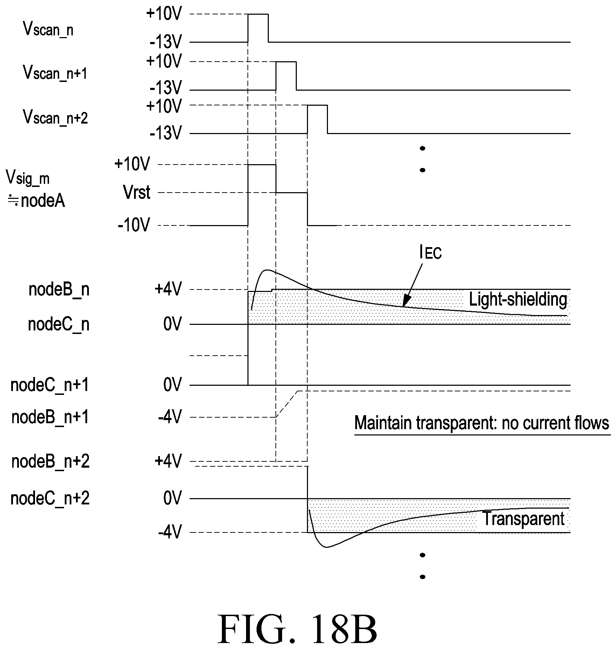

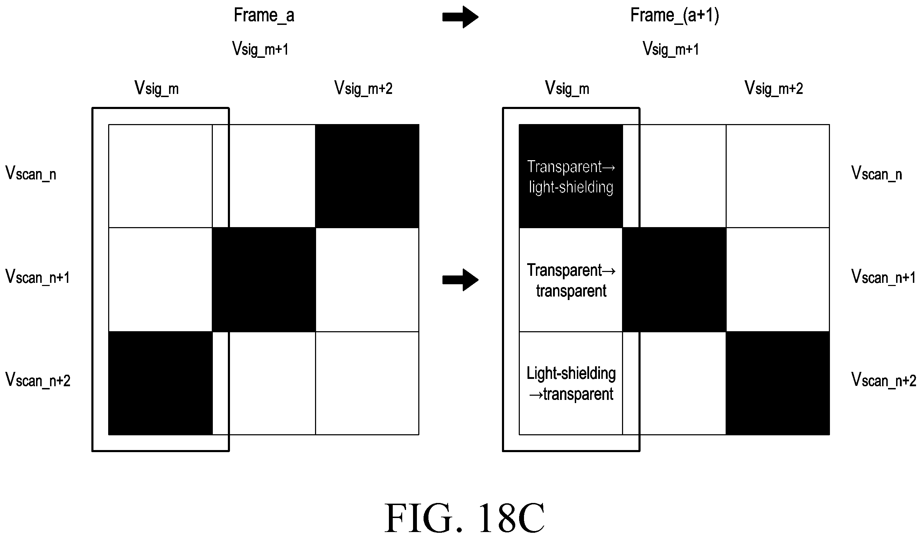

FIG. 18A is a view illustrating the dimming pixel circuit 70 of the dimming pixel 100. The dimming pixel circuit 70 of the present embodiment is the same as that of the first embodiment. In FIG. 18A, the electrochromic element 110 is also illustrated. FIG. 18B is a view illustrating a timing chart of the write operation of the dimming signal voltage (Vsig) to the dimming pixel 100. FIG. 18C is a view illustrating the state of the electrochromic element 110 of each dimming pixel 100 before and after the dimming signal voltage (Vsig) is written in the timing chart of FIG. 18B. In FIG. 18C, the light-shielding state is illustrated in black, and the transparent state is illustrated in white.

As illustrated in FIG. 18A, the dimming pixel circuit 70 may include a driving circuit 120, a capacitive element 130, and a switching transistor 140. As described below, the reset voltage (Vrst) is superimposed on the dimming signal voltage (Vsig) supplied to the switching transistor 140 by time-division multiplexing.

FIG. 18B illustrates a timing chart for writing the dimming signal voltage (Vsig) to each of any plurality of dimming pixels 100 disposed in the column direction. n, n+1, n+2 indicate row numbers. Hereinafter, for simplification of description, unless otherwise designated, similar to the description of the first embodiment, the description will focus on the write operation of the dimming signal voltage (Vsig) to the dimming pixels 100 of row numbers n, n+1, n+2 in any one column. In FIG. 18B, the subscript m of the dimming signal voltage (Vsig) indicates the column number of the corresponding any one column.

The scanning signal line supplying the scanning signal (Vscan) is provided for each row. Therefore, the dimming signal voltage (Vsig) is written to the dimming pixel 100 for each row. When the scanning signal is High (+10V), the switching transistor 140 conducts (turns ON), and the dimming signal voltage (Vsig) is maintained in the capacitive element 130, whereby the dimming signal voltage (Vsig) is written to the dimming pixel 100. In the example of FIG. 18B, the dimming signal voltage (Vsig) is written to the dimming pixels 100 in the order of row n, row n+1, row n+2. The scanning signal (Vscan) for writing the dimming signal voltage (Vsig) to the dimming pixel 100 of row n is indicated as Vscan_n. The scanning signal (Vscan) for writing the dimming signal voltage (Vsig) to the dimming pixel 100 of row n+1 is indicated as Vscan_n+1. The scanning signal (Vscan) for writing the dimming signal voltage (Vsig) to the dimming pixel 100 of row n2 is indicated as Vscan_n2. The electrochromic element 110 according to an embodiment of the disclosure is an element configured to switch between an ON state and an OFF state without requiring gradation expression of three or more levels, so digital control (e.g., a state in which the OFF state is designated as 0 and the ON state is designated as 1) may be applied.

The dimming signal voltage (Vsig) is time-division multiplexed with the dimming signal voltage (Vsig) and the reset voltage (Vrst) for writing to each dimming pixel 100. In the example of FIG. 18B, the time-division multiplexed dimming signal voltage (Vsig) is illustrated with the dimming signal voltage (Vsig (+10V)) for changing the dimming pixel 100 of row n from a transparent state to a light-shielding state, the reset voltage (Vrst) (e.g., 0V) for maintaining the transparent state of the dimming pixel 100 of row n+1, and the dimming signal voltage (Vsig (+10V)) for changing the dimming pixel 100 of row n+2 from a light-shielding state to a transparent state.

In the present embodiment, as described above, the reset voltage (Vrst) is superimposed on the dimming signal voltage (Vsig) by time-division multiplexing. The reset voltage (Vrst) superimposed on the dimming signal voltage (Vsig) is maintained in the capacitive element 130 of the dimming pixel 100 by the switching transistor 140 of the dimming pixel 100 conducting by the scanning signal (Vscan). Accordingly, by inputting the reset voltage (Vrst) to the driving circuit 120, the output of the driving circuit 120 becomes floating (high impedance).

The dimming signal voltage (Vsig) is sequentially written to the dimming pixels 100 of each row at the timing when the switching transistor 140 of each row sequentially conducts by the scanning signal (Vscan). As a result, by maintaining the dimming signal voltage (Vsig) in the capacitive element 130, nodeA becomes a voltage corresponding to the dimming signal voltage (Vsig).

The controller 1000 supplies the reset voltage (Vrst) as the dimming signal voltage (Vsig) to the dimming pixel 100 that is in a transparent state in the current frame of the dimming image and will also be in a transparent state in the next frame. Therefore, since the dimming signal voltage (Vsig) is not rewritten to the dimming pixel 100 in the corresponding next frame, unnecessary power consumption due to rewriting may be suppressed. Specifically, by supplying the driving voltage (e.g., -4V) for setting the electrochromic element 110 to a transparent state by rewriting and blocking the leakage current flowing through the electrochromic element 110, unnecessary power consumption may be suppressed.

As illustrated in FIG. 18C, e.g., there may be cases where the dimming pixel 100 with the electrochromic element 110 in a transparent state in the previous frame (Frame_a) also becomes a transparent state in the next frame (Frame_(a+1)). In other words, there may be a dimming pixel 100 including an electrochromic element 110 that is in a transparent state in the current frame and also becomes a transparent state in the next frame. As described above, in this case, the controller 1000 sets the output of the driving circuit 120 of the dimming pixel 100 to high impedance by supplying the reset voltage (Vrst) as the dimming signal voltage (Vsig) to the dimming pixel 100. The electrochromic element 110 has memory characteristics in the transparent state. For this reason, the electrochromic element 110 in the transparent state maintains the transparent state even when the driving voltage for setting the electrochromic element 110 to the transparent state is not supplied.

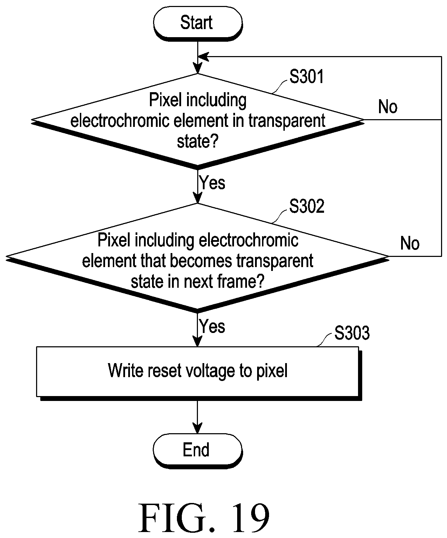

FIG. 19 is a view illustrating a flowchart of the operation of the dimming image display device 1. This flowchart may be executed by the controller 1000 based on a program.

The controller 1000 determines for each dimming pixel 100 whether it is a dimming pixel 100 including an electrochromic element 110 in a transparent state in the current frame (S301).

When the controller 1000 determines that the dimming pixel 100 to be determined is not a dimming pixel 100 including an electrochromic element 110 in a transparent state in the current frame (S301: NO), it executes the process of step S301.

When the controller 1000 determines that the dimming pixel 100 to be determined is a dimming pixel 100 including an electrochromic element 110 in a transparent state in the current frame (S301: YES), it determines whether the dimming pixel 100 is a dimming pixel 100 including an electrochromic element 110 that becomes a transparent state in the next frame (S302).

When the controller 1000 determines that the dimming pixel 100 to be determined is not a dimming pixel 100 including an electrochromic element 110 that becomes a transparent state in the next frame (S302: NO), it executes the process of step S301.

When the controller 1000 determines that the dimming pixel 100 to be determined is a dimming pixel 100 including an electrochromic element 110 that becomes a transparent state in the next frame (S302: YES), it writes the reset voltage to the dimming pixel 100 (S303).

The embodiment has the following effects.

A driving circuit connected to one electrode of an electrochromic element and outputting a driving voltage to the electrode according to an input signal voltage is made a CMOS circuit using a transistor having enhance characteristics. Thereby, image quality deterioration caused by operational instability of the electrochromic element when the driving voltage to the electrochromic element by the driving circuit is switched may be enhanced.

Further, the electrochromic material of the electrochromic element includes one or more metal elements selected from the group composed of silver, bismuth, chromium, iron, cadmium, cobalt, nickel, tin, lead, and copper. Therefore, even when using an electrochromic element whose instability increases due to shoot-through current in the driving circuit, the operational instability of the electrochromic element when the driving voltage to the electrochromic element by the driving circuit is switched may be effectively enhanced.

Further, a reset circuit is provided that outputs the supplied reset voltage to the input of the driving circuit when a reset signal is input, and floats the output of the driving circuit when the reset signal is input. Therefore, when writing a signal voltage to a dimming pixel, leakage current in dimming pixels of other stages may be blocked, so voltage drop of the power supply or the like due to leakage current may be suppressed.

Further, the plurality of dimming pixels are two-dimensionally arranged to form a plurality of rows and a plurality of columns, and the inputs of the switching transistors in the same row are connected to each other. A scanning signal that turns on the switching transistor is input to the input of the switching transistor of the dimming pixels forming one row to output the signal voltage supplied to the switching transistor to the driving circuit. Thereafter, before inputting the scanning signal to the input of the switching transistor of the dimming pixels forming the one row, the scanning signal is input to the input of the switching transistor of the dimming pixels, and a reset voltage is supplied to the switching transistor of the dimming pixels forming another row where the electrochromic element has been switched to either a transparent state or a light-shielding state, and the scanning signal is input to output the reset voltage to the driving circuit. Thereby, when writing a signal voltage to a dimming pixel, leakage current in dimming pixels of other stages may be blocked, so voltage drop of the power supply or the like due to leakage current may be suppressed, and deterioration of the aperture ratio (e.g., the ratio between the total screen area of the display device and the area capable of displaying information) may be prevented.

Further, when displaying the next dimming image frame, the reset voltage is output to the input of the driving circuit of the dimming pixel including the electrochromic element that is in a transparent state in the current dimming image frame and also becomes a transparent state in the next dimming image frame. Therefore, unnecessary power consumption during rewriting may be suppressed.

The above-described embodiments are merely examples, and those having ordinary skill in the art to which the disclosure pertains will understand that various modifications and equivalent other embodiments are possible therefrom. Therefore, the disclosed embodiments should be considered from an explanatory perspective rather than a restrictive perspective. The scope of rights is illustrated in the claims, and all configurations within the equivalent scope should be construed as being included in the scope of rights.

## Claims

1. A display device, comprising:
an image display device having a plurality of pixels and configured to display an image;
a dimming device having a dimming image display device including a plurality of dimming pixels and configured to switch a transmittance of each dimming pixel of the dimming image display device; and
a control circuit configured to switch the transmittance of the dimming pixels in a region of the dimming image display device corresponding to an object region in the image from a first transmittance to a second transmittance,
wherein the dimming pixel includes an electrochromic element and a pixel circuit,
wherein the pixel circuit has:
a driving circuit electrically connected to one electrode of the electrochromic element and configured to apply a driving voltage to the one electrode according to a signal voltage;
a switching transistor configured to apply the signal voltage to an input terminal of the driving circuit according to a scanning signal; and
a capacitive element electrically connected to the input terminal of the driving circuit and configured to maintain the signal voltage applied to the driving circuit,
wherein the driving circuit includes a CMOS circuit using a transistor having enhance characteristics.

2. The display device of claim 1, wherein the control circuit is configured to detect the object region based on the image and change the transmittance of the dimming pixels in the corresponding region corresponding to the detected object region from the first transmittance to the second transmittance.

3. The display device of claim 1, wherein the control circuit is configured to determine whether the object region is set to be changed to the second transmittance, and based on the object region being set to be changed to the second transmittance, change the transmittance of the dimming pixels in the corresponding region to the second transmittance, and
based on the object region being set not to be changed to the second transmittance, control the dimming pixels so that the transmittance of all the dimming pixels becomes the first transmittance.

4. The display device of claim 1, wherein the electrochromic element includes two electrodes facing each other, and an electrochromic material included between the two electrodes includes an electrolyte layer including an electrochromic material including at least one metal element among silver, bismuth, chromium, iron, cadmium, cobalt, nickel, tin, lead, or copper.

5. The display device of claim 1, comprising a reset circuit outputting a supplied reset voltage to the input of the driving circuit when a reset signal is input, and
wherein the reset voltage is a voltage that causes an output of the driving circuit to float by being output toward the input terminal of the driving circuit.

6. The display device of claim 5, having a plurality of the pixels each having the pixel circuit of claim 5, wherein the plurality of pixels are two-dimensionally arranged to form a plurality of rows and a plurality of columns,
wherein inputs of the switching transistors in the same row are interconnected,
wherein inputs of the reset circuits in the same row are interconnected, and
comprising a controller inputting the scanning signal that turns on the switching transistor to the input of the switching transistor of the pixels forming one row, to output the signal voltage supplied to the switching transistor to the input of the driving circuit, whereby after the electrochromic element of the pixels forming the one row is switched to either a transparent state or a light-shielding state, inputting the reset signal to the input of the reset circuit of the pixels forming the one row.

7. The display device of claim 1, having a plurality of the pixels each having the pixel circuit of claim 1, wherein the plurality of pixels are two-dimensionally arranged to form a plurality of rows and a plurality of columns,
wherein inputs of the switching transistors in the same row are interconnected, and
comprising a controller inputting the scanning signal that turns on the switching transistor to the input of the switching transistor of the pixels forming one row, to output the signal voltage supplied to the switching transistor to the driving circuit, and then before inputting the scanning signal to the input of the switching transistor of the pixels forming the one row, the scanning signal is input to the input of the switching transistor of the pixels, and supplying a reset voltage to the switching transistor of the pixels forming another row in which the electrochromic element has been switched to either a transparent state or a light-shielding state and inputting the scanning signal to output the reset voltage to the driving circuit,
wherein the reset voltage is a voltage that causes the output of the CMOS circuit to float by being output to the input of the driving circuit.

8. The display device of claim 1, having a plurality of the pixels each having the pixel circuit of claim 1,
wherein the controller outputs the reset voltage to the input of the driving circuit of the pixel including the electrochromic element that is in a transparent state in a current image frame and also becomes a transparent state in a next image frame when displaying the next image frame.

9. A control method by the controller of the display device of claim 1, comprising a step (a) of detecting the object region based on the image and switching the transmittance of the dimming pixels in the corresponding region corresponding to the detected object region to a low transmittance.

10. The control method of claim 9, comprising:
a step (b) of determining whether to set the object region to low transmittance; and
a step (c) of switching the transmittance of the dimming pixels in the corresponding region to low transmittance when determining to set the object region to low transmittance in the step (b), and switching the transmittance of all the dimming pixels to high transmittance when determining not to set the object region to low transmittance.

11. A control method for a display device including a plurality of pixels having an electrochromic element, a driving circuit connected to one electrode of the electrochromic element and outputting a driving voltage to the electrode according to an input signal voltage, a switching transistor outputting the supplied signal voltage to an input of the driving circuit according to an input scanning signal, a capacitive element connected to the input of the driving circuit and maintaining the signal voltage output to the driving circuit, and a reset circuit outputting a supplied reset voltage to the input of the driving circuit when a reset signal is input, wherein the plurality of pixels are two-dimensionally arranged to form a plurality of rows and a plurality of columns, inputs of the switching transistors in the same row are interconnected, and inputs of the reset circuits in the same row are interconnected, the control method comprising: a step of inputting the scanning signal that turns on the switching transistor to the input of the switching transistor of the pixels forming one row to output the signal voltage supplied to the switching transistor to the input of the driving circuit, whereby after the electrochromic element of the pixels forming the one row is switched to either a transparent state or a light-shielding state, inputting the reset signal to the input of the reset circuit of the pixels forming the one row, wherein the reset voltage is a voltage that causes the output of the driving circuit to float by being output to the input of the driving circuit.

12. The control method of a display device of claim 11, further comprising a step of outputting the reset voltage to the input of the driving circuit of the pixel including the electrochromic element that is in a transparent state in a current image frame and also becomes a transparent state in a next image frame when displaying the next image frame.

13. A computer-readable non-transitory recording medium configured to store instructions executed by the display device of claim 1, wherein the instructions include an instruction detecting the object region based on the image and switching the transmittance of the dimming pixels in the corresponding region corresponding to the detected object region to low transmittance.

14. The computer-readable non-transitory recording medium, wherein the instructions include an instruction determining whether to set the object region to low transmittance, and an instruction switching the transmittance of the dimming pixels in the corresponding region to low transmittance when determining to set the object region to low transmittance, and switching the transmittance of all the dimming pixels to high transmittance when determining not to set the object region to low transmittance.

15. The computer-readable non-transitory recording medium of claim 13, wherein the instructions include an instruction for the control circuit to detect the object region based on the image, and an instruction to change the transmittance of the dimming pixels in the corresponding region corresponding to the detected object region from the first transmittance to the second transmittance.
